# EUROPEAN PATENT SPECIFICATION

(11) **EP 4 249 214 B1**
(45) Date of publication and mention of the grant of the patent: **30.10.2024**
(21) Application number: 23162034.5
(22) Date of filing: 15.03.2023
(51) Int. Cl.: B29C 64/112, B29C 64/336, B29C 64/393, B29C 64/40, B33Y 10/00, B33Y 40/00, B33Y 50/02, B29L 31/00, A61C 13/00, A61C 13/08, A61C 13/087

(54) **THREE-DIMENSIONAL OBJECT PRODUCING METHOD, THREE-DIMENSIONAL OBJECT PRODUCING APPARATUS, AND ARTIFICIAL TOOTH OBJECT PRODUCING METHOD**
VERFAHREN ZUR HERSTELLUNG EINES DREIDIMENSIONALEN OBJEKTS, VORRICHTUNG ZUR HERSTELLUNG EINES DREIDIMENSIONALEN OBJEKTS UND VERFAHREN ZUR HERSTELLUNG EINES KÜNSTLICHEN ZAHNOBJEKTS
PROCÉDÉ DE PRODUCTION D'OBJET TRIDIMENSIONNEL, APPAREIL DE PRODUCTION D'OBJET TRIDIMENSIONNEL ET PROCÉDÉ DE PRODUCTION D'OBJET DENTAIRE ARTIFICIEL

(30) Priority: 22.03.2022 JP 2022046134
(43) Date of publication of application: 27.09.2023
(73) Proprietor: Ricoh Company, Ltd., Tokyo 143-8555 (JP)
(72) Inventor: NAITO, Hiroyuki, Tokyo, 143-8555 (JP)
(74) Representative: Marks & Clerk LLP

(56) References cited:
- WO-A1-2023/007305
- JP-A- 2012 061 756
- JP-A- 2016 221 880
- US-A1- 2016 229 124

## Description

### BACKGROUND OF THE INVENTION

### 1. Field of the Invention

The disclosures herein generally relate to a three-dimensional object producing method, a three-dimensional object producing apparatus, and an artificial tooth object producing method.

### 2. Description of the Related Art

Techniques called Additive Manufacturing (AM) have been known as techniques for producing three-dimensional objects. The techniques calculate the shapes of cross-sections that are thinly sliced with respect to the layer lamination direction, form each layer according to the calculated shape, and laminate layers, to produce a three-dimensional object. In recent years, among the additive manufacturing techniques, a material jetting method of deploying a curable composition at needed positions using an inkjet head, and curing the deployed curable composition with, for example, active energy rays using, for example, a light irradiator, to produce a three-dimensional object has attracted attention.

The material jetting method is mainly used for prototyping, and cured products need to have various properties such as strength, hardness, elastic modulus, extensibility, impact resistance, and heat resistance. The features of the material jetting method include a coloring capability by use of coloring inks containing coloring materials.

In order to produce a good material-jetted object having no color tone defect, a disclosed method attempts to minimize color unevenness in an object by varying the amount of a coloring ink to be discharged to any part of the object in which coloring inks overlap when layers are laminated from the amount of the coloring ink to be discharged to any part of the object in which coloring inks do not overlap when layers are laminated (see Japanese Patent No. 6389061).

A method and an apparatus according to the preamble of claims 1 and 18 is disclosed in US 2016/229124.

### SUMMARY OF THE INVENTION

A three-dimensional object producing method is set out in claim 1. A three-dimensional object producing apparatus is set out in claim 18.

### BRIEF DESCRIPTION OF THE DRAWINGS

FIG. 1 is an exemplary view illustrating an example of an existing process for producing a colored three-dimensional object;
FIG. 2 is an exemplary view illustrating an example of a process for producing a colored three-dimensional object according to an embodiment of a three-dimensional object producing method of the present disclosure;
FIG. 3 is a schematic cross-sectional view illustrating an object producing apparatus according to an embodiment of a three-dimensional object producing apparatus of the present disclosure;
FIG. 4 is a view illustrating an example of a method for producing a test piece for total light transmittance measurement in Example;
FIG. 5 is a shot image of a three-dimensional object including a two-dimensional code produced in Test Example 1, where the double-headed arrow in the drawing is a scale bar representing 6 mm; and
FIG. 6 is a shot image of an object (artificial tooth) produced in Example 14.

### DESCRIPTION OF THE PREFERRED EMBODIMENTS

In the following, embodiments of the present invention will be described with reference to the accompanying drawings.

### (Three-dimensional object producing method and three-dimensional object producing apparatus)

A three-dimensional object producing method of the present disclosure is a method for producing a three-dimensional object using a set of base curable compositions including a curable composition A and a curable composition B, and using a curable composition C, and includes a base cured product producing step of discharging either or both of the curable composition A and the curable composition B by an inkjet method and curing either or both of the curable composition A and the curable composition B, to produce a base cured product, and a cured product C producing step of discharging the curable composition C containing a coloring material by an inkjet method and curing the curable composition C, to produce a cured product C. A deposited region C formed by deposition of the curable composition C discharged is smaller than a base deposited region formed by deposition of the curable composition A and the curable composition B discharged. The absolute value of the difference between the total light transmittance through a cured product A of the curable composition A and the total light transmittance through a cured product B of the curable composition B is 10% or greater.

As the curable composition C, one kind of a curable composition C may be used alone, or a plurality of curable compositions C containing coloring materials that develop different colors such as cyan (C), magenta (M), yellow (Y), and black (K) may be used, or a mixture of any two or more of these curable compositions C may be used.

The three-dimensional object producing method preferably further includes a cured product D for support producing step in addition to the base cured product producing step and the cured product C producing step, and further includes other steps as needed.

The base cured product producing step and the cured product C producing step, and also the cured product D for support producing step and the other steps as needed may be performed independently, or some of the steps may be performed at the same time.

In the present specification, "independently" means that the steps and operations may be performed alone and may be performed at the same time.

The present disclosure has an object to provide a three-dimensional object producing method for producing a highly accurate, colored three-dimensional object in which color gradations can be expressed.

The present disclosure can provide a three-dimensional object producing method for producing a highly accurate, colored three-dimensional object in which color gradations can be expressed.

A three-dimensional object producing apparatus of the present disclosure is an apparatus configured to produce a three-dimensional object using a set of base curable compositions including a curable composition A and a curable composition B, and using a curable composition C, and includes a base cured product producing unit configured to discharge either or both of the curable composition A and the curable composition B by an inkjet method and cure either or both of the curable composition A and the curable composition B, to produce a base cured product, and a cured product C producing unit configured to discharge the curable composition C containing a coloring material by an inkjet method and cure the curable composition C, to produce a cured product C. A deposited region C formed by deposition of the curable composition C discharged is smaller than a base deposited region formed by deposition of the curable composition A and the curable composition B discharged. The absolute value of the difference between the total light transmittance through a cured product A of the curable composition A and the total light transmittance through a cured product B of the curable composition B is 10% or greater.

The three-dimensional object producing apparatus preferably includes a cured product D for support producing unit in addition to the base cured product producing unit and the cured product C producing unit, and further includes other units as needed.

The three-dimensional object producing method of the present disclosure is suitably performed by the three-dimensional object producing apparatus of the present disclosure. The three-dimensional object producing apparatus of the present disclosure will be described below in conjunction with the three-dimensional object producing method of the present disclosure. The present disclosure is not limited to the embodiments described below, and other embodiments, additions, modifications, and deletions that are within reach of persons ordinarily skilled in the art may be made. Any mode in which the functions and the effects of the present disclosure are exhibited is included within the scope of the present disclosure.

The existing technique (Japanese Patent No. 6389061) can control a color tone in a manner that a material-jetted, colored object has no color unevenness, but does not cover the technical concept of producing a three-dimensional object in which gradations can be expressed, and has a problem that the technique cannot express color gradations in a three-dimensional object.

For example, a three-dimensional object having gradations including whiteness and transparency is particularly useful as a dental material such as an artificial tooth. According to an aspect of the three-dimensional object producing method of the present disclosure, when an object having an artificial tooth shape is produced using the curable composition A, of which a cured product is white, the curable composition B, of which a cured product has transparency, and the curable composition C that contains a coloring material other than white, and of which a cured product is colored, the three-dimensional object thus produced can be an artificial tooth having whiteness and transparency, and having a gloss appearance.

In the present specification, a "curable composition" represents a composition that cures through, for example, being irradiated with active energy rays, being heated, or a chemical reaction, to form a cured product. Examples of the curable composition include active-energy-ray-curable compositions, thermosetting compositions, and mixed curable compositions.

Examples of the mixed curable composition include a mixed curable composition of the curable composition A and the curable composition B.

### <Base cured product producing step and base cured product producing unit>

Th base cured product producing step is a step of using a set of base curable compositions including the curable composition A and the curable composition B, discharging either or both of the curable composition A and the curable composition B by an inkjet method, and curing either or both of the curable composition A and the curable composition B, to produce a base cured product. The base cured product producing step is suitably performed by the base cured product producing unit.

Through the base cured product producing step, it is possible to form the shape of a three-dimensional structure (hereinafter, may be referred to as a "model part").

In the present specification, the "set of base curable compositions" suggests combined use of the curable composition A and the curable composition B, and independent existence of each at the same time. The set of base curable compositions is not limited to, for example, a manufactured product or a sold product in a state in which a curable composition A storage storing the curable composition A and a curable composition B storage storing the curable composition B are combined. Even if the curable composition A storage and the curable composition B storage are, for example, separate manufactured or sold products, they are comprehended within the set of base curable compositions so long as combined use of the curable composition A and the curable composition B is assumed, or combined use of the curable composition A and the curable composition B is substantially invited.

The base cured product producing unit is a unit configured to use the set of base curable compositions including the curable composition A and the curable composition B, discharge either or both of the curable composition A and the curable composition B by an inkjet method, cure either or both of the curable composition A and the curable composition B, to produce a base cured product. The base cured product producing unit preferably includes a discharging unit and a curing performing unit, and further includes other members as needed.

### <<Discharging>>

In the base cured product producing step, first, either or both of the curable composition A and the curable composition B are discharged by an inkjet method. The discharging is suitably performed by the discharging unit.

The discharging unit is not particularly limited and may be appropriately selected in accordance with the intended purpose so long as the discharging unit can discharge either or both of the curable composition A and the curable composition B. Examples of the discharging unit include a discharging head.

The discharging head is not particularly limited and may be appropriately selected in accordance with the intended purpose. Examples of the discharging head include a piezoelectric element (piezo element)-type head, and a thermally expansive (thermal)-type head. Of these heads, a piezoelectric element (piezo element)-type head is preferable.

By using the set of base curable compositions including the curable composition A and the curable composition B, the three-dimensional object producing method can control the total light transmittance through a three-dimensional object to be obtained. Hence, depending on the intended three-dimensional object, the base cured product may include a region formed only of a cured product A of the curable composition A, a region formed only of a cured product B of the curable composition B, and a region formed of a cured product of a mixture of the curable composition A and the curable composition B. Based on how the curable composition A and the curable composition B are discharged, it is possible to form these regions of the base cured product in a manner to have their respective different intended constitutions. That is, when producing a region formed only of a cured product A of the curable composition A, only the curable composition A is discharged. When producing a region formed only of a cured product B of the curable composition B, only the curable composition B is discharged. When producing a region formed of a cured product of a mixture of the curable composition A and the curable composition B, the curable composition A and the curable composition B are discharged. In this way, it is possible to produce a three-dimensional object having a desired total light transmittance.

Specifically, in the base cured product producing step, the curable composition A and the curable composition B may be discharged to the same voxel. In this case, the curable composition A and the curable composition B discharged are mixed in that same voxel, to form a base deposited region. As described above, only either the curable composition A or the curable composition B may be discharged to one voxel. Hence, by mixing the curable composition A and the curable composition B at a desirably selected ratio in one voxel and curing the curable composition A and the curable composition B, it is possible to adjust the total light transmittance through the base cured product in that voxel. By repeating this sequence, it is possible to adjust the luminosity (L*) of the three-dimensional object and the total light transmittance (Tt) through the three-dimensional object voxel by voxel.

More specifically, by the curable composition A and the curable composition B being each discharged in the form of a liquid droplet by the inkjet method, and then deposited and mixed with each other, a base deposited region is formed. Through repetition of this sequence, a thin film of the base curable compositions is formed. By the thin film being cured with, for example, active energy rays, a base cured product for one layer is formed.

When discharging the curable composition A and the curable composition B by an inkjet method, it is optional whether to discharge the curable composition A and the curable composition B in the same scan, or to discharge the curable composition A and the curable composition B separately in a plurality of operations. However, in terms of, for example, productivity, mixing of both of the curable compositions, and control against occurrence of a streak in a three-dimensional object, it is preferable to discharge the curable compositions in the same scan. When discharging the curable composition A and the curable composition B to the same voxel so that both will be mixed, it is preferable that the both of the curable compositions be mixed completely in the voxel. However, both of the curable compositions being nonuniformly mixed in the voxel is also tolerated.

A voxel in which the curable composition A and the curable composition B are not mixed is associated with a total light transmittance through the cured product A alone or a total light transmittance through the cured product B alone. A voxel in which the curable composition A and the curable composition B are mixed is associated with such a total light transmittance through a cured product as is adjusted in accordance with the mixing ratio between the curable composition A and the curable composition B. For example, when the curable composition A, the total light transmittance through a cured product of which is 80%, and the curable composition B, the total light transmittance through a cured product of which is 20%, are discharged in the same liquid droplet amount to the same voxel, then mixed, and cured, the total light transmittance through the base cured product is approximately 40%. In this way, it is possible to form a voxel associated with a total light transmittance through the cured product A alone, a voxel in which the curable composition A and the curable composition B are mixed at a predetermined ratio and that is associated with a total light transmittance adjusted in accordance with the mixing ratio between the curable composition A and the curable composition B, and a voxel associated with a total light transmittance through the cured product B alone. Hence, it is possible to adjust the luminosity (L*) of the three-dimensional object and the total light transmittance (Tt) through the three-dimensional object, and to express gradations in the three-dimensional object.

In the present specification, a "gradation property" represents "continuous or stepwise change in the total light transmittance".

In the present specification, "continuous change in the total light transmittance" represents proportional, inverse-proportional, or exponential increase or decrease in the total light transmittance from one region to another region of a three-dimensional object without inflexion points in the total light transmittance.

In the present specification, "stepwise change in the total light transmittance" represents increase or decrease in the total light transmittance from one region to another region of a three-dimensional object with inflexion points in the total light transmittance. "Stepwise change in the total light transmittance" also includes discrete change in the total light transmittance. There are at least two inflexion points. A greater number of inflexion points is preferred because more minute gradations (gray levels) can be obtained.

The curable composition A and the curable composition B that are discharged to the same voxel are mixed with each other by the diffusion effect. The diffusion effect is faster when the viscosities of the curable compositions are lower, the solubility parameters (SP values) of the curable compositions are closer to each other, and the surface tension difference between the curable compositions is greater. The Marangoni effect (Marangoni convection) is obtained.

The total liquid droplet amount (A+B), which is the total of an amount A of a liquid droplet of the curable composition A when the curable composition A is discharged in the form of a liquid droplet by an inkjet method and an amount B of a liquid droplet of the curable composition B when the curable composition B is discharged in the form of a liquid droplet by an inkjet method, is not particularly limited, may be appropriately selected in accordance with the intended purpose, and is preferably from 5 pL through 100 pL, and more preferably from 20 pL through 60 pL. When the total liquid droplet amount (A+B) is 5 pL or greater, it is possible to complete production of an object in a short time. When the total liquid droplet amount (A+B) is 100 pL or less, it is possible to produce a smooth object having no steps in the direction of the height. When the total liquid droplet amount (A+B) is 20 pL or greater, it is possible to complete production of an object in a shorter time. When the total liquid droplet amount (A+B) is 60 pL or less, it is possible to produce a smoother three-dimensional object having no steps in the direction of the height.

In the present specification, an "amount of a liquid droplet (liquid droplet amount)" represents the quantity by volume of each of the curable composition A and the curable composition B discharged to one voxel.

By distributing different ratios of the amount A (pL) of a liquid droplet of the curable composition A to the amount B (pL) of a liquid droplet of the curable composition B (i.e., liquid droplet amount A : liquid droplet amount B) in various combinations in accordance with the intended purpose in one three-dimensional object to be obtained, and curing the curable compositions mixed at such different ratios, it is possible to obtain a desired gradation property. Hence, the ratio (liquid droplet amount A : liquid droplet amount B) can be appropriately selected from the range of from 0:100 through 100:0. It is preferable to use all ratios (liquid droplet amount A : liquid droplet amount B) included in the range, because the range of colors applicable as gradations can be wide. By appropriately using a plurality of ratios between these extreme ratios (liquid droplet amount A : liquid droplet amount B), it is possible to vary the total light transmittance through the three-dimensional object, which is the cured product of the curable compositions, continuously or stepwise. Moreover, by more minutely stepping the ratio (liquid droplet amount A : liquid droplet amount B), it is possible to create gradations attributable to smoothness that cannot be obtained manually.

For example, the error diffusion method can be used as the method for more minutely controlling the continuous or stepwise changes in the total light transmittance.

In a specific example of how the discharging is performed in the base cured product producing step, the curable composition A and the curable composition B are discharged by an inkjet method in the form of a liquid droplet onto, for example, a stage having an ascending/descending function or a layer formed on the stage, and deposit on, for example, the stage or the layer, to form a deposited region (hereinafter, may be referred to as a "base deposited region"). Base deposited regions may gather and form a liquid film.

In the present specification, a "base deposited region" represents a region formed by deposition of the curable composition A and the curable composition B that are discharged to one voxel.

### <<<Curable composition A>>>

The curable composition A is a composition that can form a shape of a desired three-dimensional object (model part) by being cured. The curable composition A can be suitably used as an inkjet ink.

The curable composition A is not particularly limited and may be appropriately selected in accordance with the intended purpose so long as the curable composition A is a composition that can form a polymer. The curable composition A preferably contains a polymerizable compound, and further contains other components as needed.

When the curable composition A contains a hard solid component described below as one of the other components and the hard solid component satisfies any one, any two, or all selected from a desired volume mean particle diameter, a desired refractive index, and a desired content, a cured product A obtained by curing the curing composition A can be white.

When the curable composition A contains a coloring material described below as one of the other components, a cured product A obtained by curing the curable composition A can be colored in a color other than white and corresponding to the coloring material.

Of these options, in terms of strength, it is preferable that the curable composition A contains the hard solid component, and that the cured product A obtained by curing the curable composition A be white.

In the present specification, "a white color" is a color referred to as white in light of commonly accepted norms, and includes slightly tinted whites.

The curable composition A is suitably used in an inkjet method. As the curable composition A, an inkjet active-energy-ray-curable composition and an inkjet thermosetting composition are preferable, and an inkjet active-energy-ray-curable composition is more preferable.

### -Polymerizable compound-

The polymerizable compound represents a compound containing a polymerizable group that can polymerize in response to being irradiated with active energy rays or being heated.

The polymerizable compound is not particularly limited and may be appropriately selected in accordance with the intended purpose. Examples of the polymerizable compound include radical-polymerizable compounds, cation-polymerizable compounds, and anion-polymerizable compounds. One of these polymerizable compounds may be used alone or two or more of these polymerizable compounds may be used in combination. Among these polymerizable compounds, radical-polymerizable compounds are preferable as the polymerizable compound. When a radical-polymerizable compound is used as the polymerizable compound, increase in the viscosity is inhibited and the polymerization speed can be improved, compared with when a cation-polymerizable compound or an anion-polymerizable compound is used. Hence, the polymerizable compound can be suitably used in an inkjet method.

The radical-polymerizable compound represents a compound that can form a polymer through radical polymerization. The radical-polymerizable compound is typically a compound as a monomer unit containing one or more radical-polymerizable functional groups.

The radical-polymerizable compound is not particularly limited and may be appropriately selected in accordance with the intended purpose. Examples of the radical-polymerizable compound include radical-polymerizable monomers and radical-polymerizable oligomers.

Examples of the radical-polymerizable monomers include radical-polymerizable monofunctional monomers and radical-polymerizable multifunctional monomers.

One of these radical-polymerizable compounds may be used alone or two or more of these radical-polymerizable compounds may be used in combination.

The radical-polymerizable monomer and the radical-polymerizable oligomer are both monomer units of cured products to be obtained through a radical-polymerization reaction. That is, in the present specification, a "radical-polymerizable monomer" represents a monomer molecule containing one or more radical-polymerizable functional groups, and a "radical-polymerizable oligomer" represents an oligomer molecule containing one or more radical-polymerizable functional groups.

### --Radical-polymerizable monomer--

By using the radical-polymerizable monomer as the radical-polymerizable compound, it is possible to better inhibit increase in the viscosity of the curable composition A. By using the polymerizable monofunctional monomer, it is possible to even better inhibit increase in the viscosity of the curable composition.

The radical-polymerizable monofunctional monomer is not particularly limited and may be appropriately selected in accordance with the intended purpose. Examples of the radical-polymerizable monofunctional monomer include (meth)acrylic-based monomers, (meth)acrylamide, N,N-dimethyl (meth)acrylamide, N-isopropyl (meth)acrylamide, (meth)acryloylmorpholine, and hydroxyethyl (meth)acrylamide. One of these radical-polymerizable monofunctional monomers may be used alone or two or more of these radical-polymerizable monofunctional monomers may be used in combination. Among these radical-polymerizable monofunctional monomers, (meth)acrylic-based monomers are preferable.

Examples of the (meth)acrylic-based monomers include isobornyl (meth)acrylate, 2-ethylhexyl (meth)acrylate, 2-hydroxyethyl (meth)acrylate, 2-hydroxypropyl (meth)acrylate, caprolactone-modified tetrahydrofurfuryl (meth)acrylate, 3-methoxybutyl (meth)acrylate, tetrahydrofurfuryl (meth)acrylate, lauryl (meth)acrylate, 2-phenoxyethyl (meth)acrylate, isodecyl (meth)acrylate, isooctyl (meth)acrylate, tridecyl (meth)acrylate, caprolactone (meth)acrylate, and ethoxylated nonylphenol (meth)acrylate. One of these (meth)acrylic-based monomers may be used alone or two or more of these (meth)acrylic-based monomers may be used in combination.

Examples of the radical-polymerizable multifunctional monomer include bifunctional monomers and trifunctional or greater monomers. One of these radical-polymerizable multifunctional monomers may be used alone or two or more of these radical-polymerizable multifunctional monomers may be used in combination.

Examples of the bifunctional radical-polymerizable multifunctional monomer include dipropylene glycol di(meth)acrylate, diethylene glycol di(meth)acrylate, tripropylene glycol di(meth)acrylate, triethylene glycol di(meth)acrylate, tetraethylene glycol di(meth)acrylate, polypropylene glycol di(meth)acrylate, neopentyl glycol hydroxypivalic acid ester di(meth)acrylate, hydroxypivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonanediol di(meth)acrylate, diethylene glycol di(meth)acrylate, neopentyl glycol di(meth)acrylate, tripropylene glycol di(meth)acrylate, tricyclodecane dimethanol di(meth)acrylate, caprolactone-modified hydroxypivalic acid neopentyl glycol ester di(meth)acrylate, propoxylated neopentyl glycol di(meth)acrylate, ethoxy-modified bisphenol A di(meth)acrylate, polyethylene glycol 200 di(meth)acrylate, and polyethylene glycol 400 di(meth)acrylate. One of these bifunctional radical-polymerizable multifunctional monomers may be used alone or two or more of these bifunctional radical-polymerizable multifunctional monomers may be used in combination.

Examples of the trifunctional or greater radical-polymerizable multifunctional monomer include trimethylolpropane tri(meth)acrylate, pentaerythritol tri(meth)acrylate, dipentaerythritol hexa(meta)acrylate, triallyl isocyanurate, ε-caprolactone-modified dipentaerythritol tri(meth)acrylate, ε-caprolactone-modified dipentaerythritol tetra(meth)acrylate, (meth)acrylate, ε-caprolactone-modified dipentaerythritol penta(meth)acrylate, ε-caprolactone-modified dipentaerythritol hexa(meth)acrylate, tris(2-hydroxyethyl)isocyanurate tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylolpropane tetra(meth)acrylate, dipentaerythritol hydroxypenta(meth)acrylate, ethoxylated pentaerythritol tetra(meth)acrylate, penta(meth)acrylate ester, and 1,6-bis(methacryloyloxy-2-ethoxycarbonylamino)-2,4,4-trimethyl hexane(urethane dimethacrylate). One of these trifunctional or greater radical-polymerizable multifunctional monomers may be used alone or two or more of these trifunctional or greater radical-polymerizable multifunctional monomers may be used in combination.

The content of the radical-polymerizable monomer in the curable composition A is not particularly limited, may be appropriately selected in accordance with the intended purpose, and is preferably 30.0% by mass or greater and more preferably 40.0% by mass or greater relative to the whole mass of the curable composition A. The upper limit of the content of the radical-polymerizable monomer in the curable composition A is not particularly limited, may be appropriately selected in accordance with the intended purpose, and is preferably 99.0% by mass or less and more preferably 95.0% by mass or less relative to the whole mass of the curable composition A.

### --Radical-polymerizable oligomer--

By using the radical-polymerizable oligomer as the radical-polymerizable compound, it is possible to reduce cure shrinkage of a cured product A obtained by curing the curable composition A, and to improve extensibility and toughness of the cured product A.

The "oligomer" represents a molecule containing structural units derived from a few monomers.

The number of structural units in the oligomer is not particularly limited, may vary depending on the structure of the monomer and the use of the oligomer, and is preferably 2 units or greater and 20 units or less.

The radical-polymerizable oligomer is not particularly limited and may be appropriately selected in accordance with the intended purpose. Monofunctional or greater and hexafunctional or less oligomers are preferable, and bifunctional or greater and trifunctional or less oligomers are more preferable. One of these radical-polymerizable oligomers may be used alone or two or more of these radical-polymerizable oligomers may be used in combination.

As the radical-polymerizable oligomer, a radical-polymerizable oligomer containing a urethane group is preferable, and a urethane (meth)acrylate oligomer is more preferable.

When a radical-polymerizable oligomer containing a urethane group is used as the radical-polymerizable oligomer, interaction between side chains of a polymer is promoted, and a cured product A obtained by curing the curable composition A has an improved toughness.

A commercially available product can be used as the radical-polymerizable oligomer. Examples of the commercially available product include UV-6630B (UV-curable urethane acrylate oligomer, having a molecular weight of 3,000 and two polymerizable functional groups, available from Mitsubishi Chemical Corporation), and CN983NS (aliphatic urethane acrylate oligomer, having two polymerizable functional groups, available from Sartomer USA, LLC). One of these commercially available products may be used alone or two or more of these commercially available products may be used in combination.

Examples of the radical-polymerizable compound include (meth)acrylic-based monomers and carboxylic acid vinyl ester-based monomers, as specified above. It is preferable to use (meth)acrylic-based monomers, and it is more preferable to use acrylic-based monomers. The acrylic-based monomers can inhibit increase in the viscosity of the curable composition A and can improve the polymerization speed of the curable composition A. Hence, the acrylic-based monomers can be suitably used in an inkjet method.

When using a radical-polymerizable monofunctional monomer other than the acrylic-based monomer or an epoxy-based monomer as the radical-polymerizable compound, it is preferable to use it in combination with the acrylic-based monomer.

The epoxy-based monomer is not particularly limited and may be appropriately selected in accordance with the intended purpose. Examples of the epoxy-based monomer include bis(3,4 epoxycyclohexyl) adipate, and bisphenol A diglycidyl ether. When using an epoxy-based monomer in combination with an acrylic-based monomer, it is preferable to further use an oxetane monomer in combination.

The content of the radical-polymerizable oligomer in the curable composition A is not particularly limited, may be appropriately selected in accordance with the intended purpose, and is preferably 1.0% by mass or greater and more preferably 10.0% by mass or greater relative to the whole mass of the curable composition A. The upper limit of the content of the radical-polymerizable oligomer in the curable composition A is not particularly limited, may be appropriately selected in accordance with the intended purpose, and is preferably 40.0% by mass or less and more preferably 30.0% by mass or less relative to the whole mass of the curable composition A.

The total content of the polymerizable compound(s) in the curable composition A is not particularly limited, may be appropriately selected in accordance with the intended purpose, and is preferably 50.0% by mass or greater, more preferably 60.0% by mass or greater, yet more preferably 70.0% by mass or greater, and particularly preferably 80.0% by mass or greater relative to the whole mass of the curable composition A. The upper limit of the total content of the polymerizable compound(s) in the curable composition A is not particularly limited, may be appropriately selected in accordance with the intended purpose, and is preferably 99.0% by mass or less and more preferably 95.0% by mass or less relative to the whole mass of the curable composition A.

The total content of the polymerizable compound(s) means the total content of the radical polymerizable compound and any polymerizable compound (e.g., a cation-polymerizable compound and an anion-polymerizable compound) other than the radical-polymerizable compound.

### -Hard solid component-

The hard solid component is contained in the curable composition A in order to improve, for example, elastic modulus, strength, and impact resistance of a cured product A obtained by curing the curable composition A.

In the present specification, the hard solid component is functionally distinguished from a coloring material described below. For example, pigments, which are solid coloring materials, are not comprehended within the hard solid component.

In the present specification, "hardness" represents a property that makes shape changes less likely to occur in response to an external stress.

Persons skilled in the art can determine whether something is hard according to the criteria known in the art. Examples of the criteria include Vickers hardness and elastic modulus.

The elastic modulus of the hard solid component is not particularly limited, may be appropriately selected in accordance with the intended purpose, and is preferably 4 GPa or higher and more preferably 5 GPa or higher.

The elastic modulus can be measured by , for example, JIS K 7161, JIS K 7171, and ISO 14577.

In the present specification, a "solid component" represents a component that can maintain a solid state in the curable composition A. It is preferable that the solid component be particles in the curable composition A at normal temperature at normal pressure. Moreover, it is preferable that the solid component be dispersed in the curable composition A.

The hard solid component is not particularly limited and may be appropriately selected in accordance with the intended purpose. Examples of the hard solid component include glass, silica, alumina, zirconia, wollastonite, titanium oxide, potassium titanate, xonotlite, gypsum fiber, aluminum borate, aramid fiber, carbon fiber, glass fiber, talc, mica, glass flake, polyoxybenzoyl whisker, and various resins. Among these materials, silica, alumina, and zirconia are preferable and silica is more preferable in terms of strength of a cured product A obtained by curing the curable composition A.

Hitherto, dyes and pigments have been used as the coloring materials for coloring the curable compositions used in the material jetting method. Hitherto, for example, titanium oxide has been widely used as a coloring material for coloring cured products in white. However, titanium oxide has achieved classification into Carcinogenicity Category 2 in the European states recently (since September 2021), and stricter safety rules have been applied to titanium oxide. Hence, curable compositions having a whitening property without titanium oxide are being demanded. Therefore, in terms of safety, silica, alumina, and zirconia are preferable as the hard solid component, and silica is more preferable.

A curable composition that is used in two-dimensional printing and is intended to become white when cured need be white when it is in a thin film form (i.e., need be white when it is discharged in a small quantity). Hence, titanium oxide having a high shielding power is typically used in such a curable composition. On the other hand, a cured product of a three-dimensional object appears white even if the curable composition used does not have a shielding power of the same level as that of the two-dimensional printing, because the cured product of the three-dimensional object has a thickness that makes it appear white. Hence, the curable composition A can suitably produce a white cured product A without using titanium oxide having a high shielding power.

When the hard solid component is one that has a hydroxyl group on the surface, such as glass, silica, and alumina, it is preferable to use the hard solid component by surface-reforming the hard solid component with a silane coupling agent. Among such surface-reformed hard solid components, silica surface-reformed with a silane coupling agent is particularly preferable as the hard solid component.

The silane coupling agent is not particularly limited and may be appropriately selected in accordance with the intended purpose. Examples of the silane coupling agent include vinyl methoxysilane, vinyl ethoxysilane, 2-(3,4-epoxycyclohexyl)ethyl trimethoxysilane, 3-glycidoxypropyl methyl dimethoxysilane, 3-glycidoxypropyl trimethoxysilane, 3-glycidoxypropylmethyl diethoxysilane, 3-glycidoxypropyl triethoxysilane, styryl p-styryl trimethoxysilane, 3-methacryloxypropylmethyl dimethoxysilane, 3-methacryloxypropyl trimethoxysilane, 3-methacryloxypropylmethyl diethoxysilane, 3-methacryloxypropyl triethoxysilane, 3-acryloxypropyl trimethoxysilane, N-2-(aminoethyl)-3-aminopropylmethyl dimethoxysilane, N-2-(aminoethyl)-3-aminopropylmethyl dimethoxysilane, 3-aminopropyl trimethoxysilane, 3-aminopropyl triethoxysilane, 3-triethoxysilyl-N-(1,3-dimethylbutylidene)propylamine, N-phenyl-3-aminopropyl trimethoxysilane, hydrochloride of N-(vinylbenzyl)-2-aminoethyl-3-aminopropyl trimethoxysilane, tris-(trimethoxysilylpropyl)isocyanurate, 3-ureidopropyl trialkoxysilane, 3-mercaptopropylmethyl dimethoxysilane, 3-mercaptopropyl trimethoxysilane, 3-isocyate propyl triethoxysilane, and 3-trimethoxysilylpropyl succinic anhydride. One of these silane coupling agents may be used alone or two or more of these silane coupling agents may be used in combination.

Among these silane coupling agents, silane coupling agents containing an unsaturated double bond, such as vinyl methoxysilane, 3-methacryloxypropylmethyl dimethoxysilane, and 3-acryloxypropyl trimethoxysilane, are particularly preferable.

The shape of the hard solid component is not particularly limited, and the hard solid component may have a spherical shape, a rod shape, or an irregular shape, or may be hollow particles, porous particles, and core-shell particles. Among these shapes, spherical particles are preferable as the shape of the hard solid component in terms of dispersibility and inkjet dischargeability.

The "spherical shape" is not limited to a true spherical shape, but comprehends, for example, a spheroid and a polyhedron. For example, the "spherical shape" according to the present disclosure includes, but is not limited to, a particle in which a diameter (longer diameter) that extends over the longest length to the contour by passing the center of the particle is approximately twice as long as a diameter (shorter diameter) that extends over the shortest length to the contour by passing the center of the particle. The ratio of the shorter diameter to the longer diameter is preferably from 1:1 through 1:5, and more preferably from 1:1 through 1:2.

The volume mean particle diameter of the hard solid component in the curable composition A is not particularly limited, may be appropriately selected in accordance with the intended purpose, and is preferably 10 nm or greater and 1,000 nm or less, more preferably greater than 100 nm and 1,000 nm or less, yet more preferably greater than 100 nm and 500 nm or less, and particularly preferably 180 nm or greater and 300 nm or less. When the volume mean particle diameter of the hard solid component in the curable composition A is 10 nm or greater, it is possible to improve inkjet discharging stability by inhibiting thickening due to any increase in the surface area of the hard solid component. When the volume mean particle diameter of the hard solid component in the curable composition A is 1,000 nm or less, it is possible to improve inkjet discharging stability. When the volume mean particle diameter of the hard solid component in the curable composition A is greater than 100 nm and 1,000 nm or less, a more stable inkjet dischargeability can be obtained, and a better shielding power, a better whiteness, and a better hardness can be obtained in a cured product. Furthermore, when dispersion stability of the hard solid component in the curable composition A is taken into consideration, the volume mean particle diameter of the hard solid component is preferably 300 nm or less.

The volume mean particle diameter and granularity distribution can be measured with, for example, a granularity analyzer (MICROTRAC MODEL UPA9340, available from Nikkiso Co., Ltd.) .

The absolute value (|n_{A1}-n_{A2}|) of the difference between the refractive index (n_{A1}) of a cured product A₁ obtained by curing a curable composition A₁ formed of any other component than the hard solid component and the refractive index (n_{A2}) of the hard solid component is not particularly limited, may be appropriately selected in accordance with the intended purpose, and is preferably 0.04 or greater, more preferably 0.05 or greater, and yet more preferably 0.07 or greater. When the curable composition contains a hard solid component having a refractive index that makes the absolute value (|n_{A1}-n_{A2}|) of the refractive index difference greater than or equal to 0.04, it is possible to improve whiteness of a cured product A₂ obtained by curing a curable composition A₂ containing the hard solid component, and to obtain a curable composition that is inkjet-dischargeable and has a high strength and a high whiteness after being cured. The specified hard solid component is also preferable because the curable composition A can secure whiteness even when the curable composition A is free of titanium oxide having a high shielding power.

In the three-dimensional object producing method, it is preferable that the curable composition A be a curable composition that can make the cured product A white.

"Curable composition A₁" and "curable composition A₂" are terms used to describe the refractive index, and both have all of the properties of the "curable composition A" except the refractive index.

Likewise, "cured product A₁" and "cured product A₂" are terms used to describe the refractive index, and both have all of the properties of the "cured product A" except the refractive index.

The refractive index represents refractive index n25D measured under D-rays (light having a wavelength of 589.3 nm) of a sodium-vapor lamp at 25°C by a B method using an Abbe's refractometer and stipulated by JIS K 7142. For example, it is possible to measure the refractive index using an Abbe's refractometer NAR-1T (available from Atago Co., Ltd.) under D-rays (589.3 nm) of a light source lamp.

It is possible to measure the refractive index (n_{A1}) of a cured product A₁ obtained by curing the curable composition A₁ formed of any other component than the hard solid component, according to the following procedures.

First, a cured product A₁ obtained by curing the curable composition A₁ formed of any other component than the hard solid component is produced. Next, the cured product A₁ is shaved with waterproof abrasive paper #400 or a metal file, and the refractive index of the obtained particles of the cured product A₁ free of the hard solid component is measured. The curable composition A₁ formed of any other component than the hard solid component may be one that is obtained by removing the hard solid component from the curable composition A₂ containing the hard solid component.

It is possible to measure the refractive index (n_{A2}) of the hard solid component by measuring the refractive index of the hard solid component as is, or of the hard solid component separated from the curable composition.

Specifically, an average refractive index of the hard solid component calculated according to the procedures specified by the B method using an Abbe's refractometer and stipulated by JIS K 7142 is used as the refractive index (n_{A2}) of the hard solid component, where the B method specifies that "When the sample is a powder, a pellet, or a granule, a sample quantity necessary for five or more measurements is prepared, and the refractive index is measured five times. Then, an average value having four significant digits is calculated".

It is possible to identify the hard solid component and any other component than the hard solid component from a cured product A₂, a three-dimensional object, and the below-described artificial tooth object that are obtained by curing the curable composition A₂. Specifically, it is possible to identify the hard solid component and any other component than the hard solid component that are contained in the curable composition A₂ by, for example, pyrolytic Gas Chromatography-Mass Spectrometry (GC-MS), Fourier-Transform InfraRed spectroscopy (FT-IR), micro-Raman spectroscopy, various methods of Nuclear Magnetic Resonance (NMR), and Time-Of-Flight Secondary Ion Mass Spectrometry (TOF-SIMS). The refractive index (n_{A1}) of the cured product A₁ of any other component than the hard solid component and the refractive index (n_{A2}) of the hard solid component can be measured according to the procedures specified above.

The content of the hard solid component in the curable composition A is not particularly limited, may be appropriately selected in accordance with the intended purpose, and is preferably 3% by volume or greater, more preferably 5% by volume or greater, and yet more preferably 10% by volume or greater relative to the whole volume of the curable composition A. When the content of the hard solid component is 3% by volume or greater relative to the whole volume of the curable composition A, a sufficient shielding power can be obtained, and a high whiteness and a high hardness can be obtained after curing. When the content of the hard solid component is 5% by volume or greater relative to the whole volume of the curable composition A, a better shielding power, a better whiteness, and a better hardness can be obtained in the cured product A obtained by curing the curable composition A.

The content of the hard solid component in the curable composition A is preferably 40% by volume or less, and more preferably 30% by volume or less. When the content of the hard solid component is 40% by volume or less relative to the whole volume of the curable composition A, it is possible to inhibit the viscosity of the curable composition A from being excessively high and obtain a curable composition suitable for inkjet discharging, and to inhibit reduction in the bindability of a matrix resin in a cured product A obtained by curing the curable composition A and inhibit the cured product A from becoming brittle as a result. When the content of the hard solid component is 30% by volume or less relative to the whole volume of the curable composition A, it is possible to obtain a more stable inkjet dischargeability and cured product hardness.

The lower limit and the upper limit of the content of the hard solid component in the curable composition A may be appropriately combined, and the content of the hard solid component in the curable composition A is preferably 3% by volume or greater and 40% by volume or less, more preferably 5% by volume or greater and 30% by volume or less, and yet more preferably 10% by volume or greater and 30% by volume or less.

It is known that the viscosity of the curable composition A increases as the content of the hard solid component is increased. It is generally preferable that the viscosity of a curable composition used for being discharged by an inkjet method be low. Hence, it is preferable to adjust the viscosity of the curable composition A in a range suitable for the inkjet method by taking a balance between the content of the hard solid component and the volume mean particle diameter of the hard solid component.

In the present specification, a "matrix resin" represents a cured resin that is other than the hard solid component and surrounds the hard solid component in the cured product A obtained by curing the curable composition A.

### -Other components-

The other components are not particularly limited and may be appropriately selected in accordance with the intended purpose. Examples of the other components include a polymerization initiator, a surfactant, a polymerization inhibitor, a dispersant, an organic solvent, water, and a coloring material. One of these other components may be used alone or two or more of these other components may be used in combination.

### --Polymerization initiator--

The polymerization initiator is not particularly limited and may be appropriately selected in accordance with the intended purpose so long as the polymerization initiator can generate active species such as radicals, cations, and anions in response to active energy rays or thermal energy and initiate polymerization of the polymerizable compound. Examples of the polymerization initiator include photopolymerization initiators and thermal polymerization initiators. One of these polymerization initiators may be used alone or two or more of these polymerization initiators may be used in combination.

### ---Photopolymerization initiator---

As the photopolymerization initiator, for example, a radical photopolymerization initiator and a cation photopolymerization initiator that generate radicals or cations in response to irradiation with active energy rays such as light can be used.

Examples of the radical photopolymerization initiator include acetophenone, 2,2-diethoxyacetophenone, p-dimethylaminoacetophenone, benzophenone, 2-chlorobenzophenone, p,p'-chlorobenzophenone, p,p-bisdiethylaminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, thioxanthone, 2-chlorothioxanthone, 2-hydroxy-2-methyl-1-phenyl-1-one, 1-(4-isopropylphenyl)2-hydroxy-2-methylpropan-1-one, methyl benzoyl formate, 1-hydroxycylohexyl phenyl ketone, azobis isobutyronitrile, benzoyl peroxide, and di-tert-butyl peroxide. One of these radical photopolymerization initiators may be used alone or two or more of these radical photopolymerization initiators may be used in combination.

Examples of commercially available products of the cation photopolymerization initiator include UVI-6950, UVI-6970, UVI-6974, and UVI-6990 (all available from Union Carbide Corporation), ADEKA OPTOMER SP-150, SP-151, SP-170, and SP-172 (all available from ADEKA Corporation), IRGACURE 261 (available from BASF GmbH), CI-2481, CI-2624, CI-2639, and CI-2064 (all available from Nippon Soda Co., Ltd.), CD-1010, CD-1011, and CD-1012 (all available from Sartomer USA, LLC), DTS-102, DTS-103, NAT-103, NDS-103, TPS-103, MDS-103, MPI-103, and BBI-103 (all available from Midori Kagaku Co., Ltd.), and PCI-061T, PCI-062T, PCI-020T, and PCI-022T (all available from Nippon Kayaku Co., Ltd.). One of these commercially available products may be used alone or two or more of these commercially available products may be used in combination.

Examples of an anion photopolymerization initiator include o-nitrobenzyl carbamate derivatives, o-acyloxyl derivatives, and o-carbamoyloxime amidine derivatives. One of these anion photopolymerization initiators may be used alone or two or more of these anion photopolymerization initiator may be used in combination.

### ---Thermal polymerization initiator---

As the thermal polymerization initiator, a desirably selected substance that generates radicals, cations, or anions in response to being heated can be used. Examples of the thermal polymerization initiator include azo-based initiators, peroxide initiators, persulfate initiators, and redox (oxidoreduction) initiators. One of these thermal polymerization initiators may be used alone or two or more of these thermal polymerization initiators may be used in combination.

As the azo-based initiator, a commercially available product can be used. Examples of the commercially available product include VA-044, VA-46B, V-50, VA-057, VA-061, VA-067, VA-086, 2,2'-azobis(4-methoxy-2,4-dimethylvaleronitrile) (VAZO 33), 2,2'-azobis(2-amidinopropane) dihydrochloride (VAZO 50), 2,2'-azobis(2,4-dimethylvaleronitrile) (VAZO 52), 2,2'-azobis(isobutyronitrile) (VAZO 64), 2,2'-azobis-2-methyl butyronitrile (VAZO 67), and 1,1-azobis(1-cyclohexanecarbonitrile) (VAZO 88) (all available from DuPont Chemical Company, "VAZO" is a trademark), and 2,2'-azobis(2-cyclopropylpropionitrile) and 2,2'-azobis(methyl isobutyrate) (V-601) (both available from FUJIFILM Wako Pure Chemical Corporation).

Examples of the peroxide initiator include benzoyl peroxide, acetyl peroxide, lauroyl peroxide, decanoyl peroxide, dicetylperoxy dicarbonate, di(4-t-butylcyclohexyl)peroxy dicarbonate (PERKADOX 16S) (available from Akzo Nobel N.V., "PERKADOX" is a trademark), di(2-ethylhexyl)peroxy dicarbonate, t-butylperoxy pivalate (LUPERSOL 11) (available from Elf Atochem Japan, "LUPERSOL" is a trademark), t-butylperoxy-2-ethyl hexanoate (TRIGONOX 21-C50) (available from Akzo Nobel N.V., "TRIGONOX" is a trademark), and dicumyl peroxide.

Examples of the persulfate initiator include potassium persulfate, sodium persulfate, and ammonium persulfate.

Examples of the redox (oxidoreduction) initiator include combinations of persulfate initiators with reductants such as sodium hydrogen metasulfite and sodium bisulfite, and systems based on organic peroxides and tertiary amines, such as a system based on benzoyl peroxide and dimethyl aniline, systems based on organic hydroperoxides and transition metals, and a system based on cumene hydroperoxide and cobalt naphthate.

The content of the polymerization initiator in the curable composition A is not particularly limited, may be appropriately selected in accordance with the intended purpose, and is preferably 0.1% by mass or greater and 10.0% by mass or less and more preferably 1.0% by mass or greater and 5.0% by mass or less relative to the whole mass of the curable composition A.

### --Surfactant--

The surfactant is not particularly limited, may be appropriately selected in accordance with the intended purpose, and is preferably a compound having a molecular weight of 200 or greater and 5,000 or less. Specific examples of such surfactants include: polyethylene glycol (PEG)-type nonionic surfactants such as an adduct of nonylphenol with from 1 mole through 40 moles of ethylene oxide (hereinafter, may be abbreviated as EO) and an adduct of stearic acid with from 1 mole through 40 moles of EO; multivalent alcohol-type nonionic surfactants such as sorbitan palmitic acid monoester, sorbitan stearic acid monoester, and sorbitan stearic acid trimester; fluorine-containing surfactants such as an adduct of perfluoroalkyl with from 1 mole through 50 moles of EO, perfluoroalkyl carboxylate, and perfluoroalkyl betaine; and modified silicone oils such as polyether-modified silicone oil and (meth)acrylate-modified silicone oil. One of these surfactants may be used alone or two or more of these surfactants may be used in combination.

The content of the surfactant in the curable composition A is not particularly limited and may be appropriately selected in accordance with the intended purpose so long as the effect of the present disclosure is not spoiled.

### --Polymerization inhibitor--

The polymerization inhibitor is not particularly limited and may be appropriately selected in accordance with the kind of the polymerizable compound. Examples of the polymerization inhibitor include: phenol compounds such as hydroquinone, hydroquinone monomethyl ether, 2,6-di-t-buytl-p-cresol, 2,2-methylene-bis-(4-methyl-6-t-butylphenol), and 1,1,3-tris-(2-methyl-4-hydroxy-5-t-butylphenyl)butane; sulfur compounds such as dilauryl thiodipropionate; phosphorus compounds such as triphenyl phosphite; and amine compounds such as phenothiazine. One of these polymerization inhibitors may be used alone or two or more of these polymerization inhibitors may be used in combination.

The content of the polymerization inhibitor in the curable composition A is not particularly limited and may be appropriately selected in accordance with the intended purpose so long as the effect of the present disclosure is not spoiled.

### --Dispersant--

The dispersant is an additive that has a function of adsorbing to the surface of a solid component such as the hard solid component to make the solid component stably disperse in the curable composition A.

The dispersant is not particularly limited, and a publicly-known dispersant may be appropriately used.

The content of the dispersant in the curable composition A is not particularly limited and may be appropriately selected in accordance with the intended purpose so long as the effect of the present disclosure is not spoiled.

### --Organic solvent--

The curable composition A optionally contains an organic solvent although it is preferable that the curable composition A be free of an organic solvent. The curable composition A free of an organic solvent, in particular volatile organic compound (VOC), is preferable because it enhances safety at where the curable composition A is handled and makes it possible to prevent pollution of the environment.

Incidentally, the "organic solvent" represents a common non-reactive organic solvent, for example, ether, ketone, xylene, ethyl acetate, cyclohexanone, and toluene, which is clearly distinguished from the polymerizable compound.

In the present specification, "free of" an organic solvent means that no organic solvent is substantially contained (for example, to an extent at which the properties of the organic solvent affect the curable composition A). The content thereof is preferably less than 0.1% by mass relative to the whole mass of the curable composition A.

### --Water--

The curable composition A optionally contains water although it is preferable that the curable composition A be free of water, if possible.

In the present specification, "free of" water means that no water is substantially contained (for example, to an extent at which, for example, the properties of the water affect the curable composition A). The content thereof is preferably less than 1.0% by mass relative to the whole mass of the curable composition A. When the content of the water is less than or equal to a certain amount, it is possible to inhibit, for example, reduction in curing speed, reduction in curing strength, increase in water absorbency, and reduction in separability between the model part and a support part formed in a cured product D producing step described below.

### --Coloring material--

The curable composition A optionally contains a coloring material although it is preferable that the curable composition A be substantially free of a coloring material when a cured product A to be obtained by curing the curable composition A need be white.

The coloring material represents, for example, a dye or a pigment, and is functionally distinguished from the hard solid component, as mentioned above.

When the curable composition A contains the coloring material, the same dye or pigment as those that are to be specified under the heading <<<Curable composition C>>> below can be used.

In the present specification, "substantially free of" the coloring material means that no coloring material is contained in the curable composition A to an extent at which, for example, the properties of the coloring material affect the curable composition A. The content thereof is preferably less than 0.1% by mass relative to the whole mass of the curable composition A.

### [Properties of curable composition A]

It is preferable that the curable composition A that can be discharged by an inkjet method has a low viscosity, in terms of, for example, dischargeability through a nozzle.

The viscosity of the curable composition A is not particularly limited, may be appropriately selected in accordance with the intended purpose, and is preferably 1,000 mPa·s or lower, more preferably 200 mPa·s or lower, and yet more preferably 150 mPa·s or lower at 25°C. The lower limit of the viscosity of the curable composition A is not particularly limited, may be appropriately selected in accordance with the intended purpose, and is preferably 6 mPa·s or higher at 25°C in terms of dischargeability and object production accuracy.

In the base cured product producing step, by adjusting the temperature of an inkjet head or of an ink flow path, it is possible to adjust the viscosity of the curable composition A.

The viscosity of the curable composition A can be measured by a routine method. For example, the method stipulated by JIS Z 8803 can be used. Other than this, for example, the viscosity can be measured by a cone plate rotary viscometer (e.g., VISCOMETER TVE-22L, manufactured by TOKI SANGYO CO.,LTD.) using a cone rotor (1°34' x R24) at a number of rotations of 50 rpm with the temperature of hematothermal circulating water set in the range of 20°C to 65°C. A circulating constant temperature bath (e.g., VISCOMATE VM-150III, manufactured by TOKI SANGYO CO., LTD.) can be used for the temperature adjustment of the circulating water.

The surface tension of the curable composition A is not particularly limited, may be appropriately selected in accordance with the intended purpose, and is preferably from 20 mN/m through 40 mN/m at 25°C in terms of inkjet discharging stability and object production accuracy.

The surface tension can be measured by a routine method. Examples of the method include a plate method, a ring method, and a pendant drop method.

It is possible to evaluate safety of the curable composition A by checking the Safety Data Sheet (SDS) of each component (material) of the curable composition A as regards safety items relating to, for example, carcinogenicity.

### <<<Curable composition B>>>

The curable composition B is a composition that can form a shape of a desired three-dimensional object (model part) by being cured. The curable composition B can be suitably used as an inkjet ink.

The curable composition B is not particularly limited and may be appropriately selected in accordance with the intended purpose so long as the curable composition B is a composition that can form a polymer. The curable composition B preferably contains a polymerizable compound, and further contains other components as needed.

When the curable composition B contains a hard solid component described below as one of the other components and the hard solid component satisfies any one, any two, or all selected from a desired volume mean particle diameter, a desired refractive index, and a desired content, a cured product B obtained by curing the curing composition B can have transparency.

When the curable composition B contains a coloring material described below as one of the other components, a cured product B obtained by curing the curable composition B can be colored in a color other than white and corresponding to the coloring material.

Of these options, in terms of strength after curing, it is preferable that the curable composition B contains the hard solid component, and that the cured product B obtained by curing the curable composition B has transparency.

In the present specification, "transparency" of the cured product B is a property that makes the opposite side or the inside of the cured product B be seen through when the cured product B is observed from one position, and is a concept that disregards whether the cured product B is colored or not.

"Being seen through" includes not only the opposite side being seen as if the cured product B did not exist when the cured product B is observed from one position, but also a "semitransparent" state, in which the opposite side of the cured product B can be seen although the opposite side is seen cloudy or distorted.

Of these options, it is preferable that the total light transmittance through the cured product B satisfies a preferable range specified below.

Each component contained in the curable composition B will be described below. Regarding the polymerizable compound and the other components except the hard solid component contained in the curable composition B, the same ones as those used in the curable composition A can be used in the same manner. Hence, descriptions of the polymerizable compound and the other components except the hard solid component will be skipped. Descriptions of the properties of the curable composition B will also be skipped because it is preferable that the properties of the curable composition B be the same as the properties of the curable composition A.

### -Hard solid component-

The hard solid component is contained in the curable composition B in order to improve, for example, elastic modulus, strength, and impact resistance of a cured product B obtained by curing the curable composition B.

The properties of the hard solid component in the curable composition B other than volume mean particle diameter, refractive index, and content are the same as those of the hard solid component in the curable composition A. Hence, descriptions of such properties will be skipped.

The volume mean particle diameter of the hard solid component in the curable composition B is not particularly limited, may be appropriately selected in accordance with the intended purpose, and is preferably 10 nm or greater and 1,000 nm or less, and more preferably greater than 100 nm and 1,000 nm or less, or 10 nm or greater and 100 nm or less. When the volume mean particle diameter of the hard solid component in the curable composition B is 10 nm or greater, it is possible to improve inkjet discharging stability by inhibiting thickening due to any increase in the surface area of the hard solid component. When the volume mean particle diameter of the hard solid component in the curable composition B is 1,000 nm or less, it is possible to improve inkjet discharging stability.

The volume mean particle diameter and the granularity distribution can be measured with, for example, a granularity analyzer (MICROTRAC MODEL UPA9340, available from Nikkiso Co., Ltd.).

By making the refractive index (n_{B1}) of a curable composition B₁ formed of any other component than the hard solid component and the refractive index (n_{B2}) of the hard solid component close to each other, it is possible to improve transparency of a cured product B₂ obtained by curing a curable composition B₂ containing the hard solid component. The absolute value (|n_{B1}-n_{B2}|) of the difference between the refractive index (n_{B1}) of the curable composition B₁ and the refractive index (n_{B2}) of the hard solid component is not particularly limited, may be appropriately selected in accordance with the intended purpose, and is preferably 0.07 or less and more preferably 0.04 or less. When the curable composition contains a hard solid component having a refractive index that makes the absolute value (|n_{B1}-n_{B2}|) of the refractive index difference less than or equal to 0.07, it is possible to improve transparency of a cured product B₂ obtained by curing the curable composition B₂ containing the hard solid component, and to obtain a curable composition that is inkjet-dischargeable and has a high strength and a high transparency after being cured.

In the three-dimensional object producing method, it is preferable that the curable composition B be a curable composition that can make the cured product B transparent.

"Curable composition B₁" and "curable composition B₂" are terms used to describe the refractive index, and both have all of the properties of the "curable composition B" except the refractive index.

Likewise, "cured product B₂" is a term used to describe the refractive index, and has all of the properties of the "cured product B" except the refractive index.

The refractive index (n_{B2}) of the hard solid component can be measured by the same method as that for measuring the refractive index (n_{A2}) of the hard solid component.

It is possible to know the refractive index (n_{B1}) of the curable composition B₁ formed of any other component than the hard solid component, by identifying the curable composition B₁ by such a method as mass spectrometry and consulting the safety data sheet or the catalog of a commercially available product of the curable composition B₁ in search of the value concerned.

It is possible to identify the hard solid component and any other component than the hard solid component from a cured product B₂, a three-dimensional object, and a below-described artificial tooth object that are obtained by curing the curable composition B₂. Specifically, it is possible to identify the hard solid component and any other component than the hard solid component that are contained in the curable composition B₂ by, for example, pyrolytic Gas Chromatography-Mass Spectrometry (GC-MS), Fourier-Transform InfraRed spectroscopy (FT-IR), micro-Raman spectroscopy, various methods of Nuclear Magnetic Resonance (NMR), and Time-Of-Flight Secondary Ion Mass Spectrometry (TOF-SIMS). The refractive index (n_{B1}) of the curable composition B₁ formed of any other component than the hard solid component and the refractive index (n_{B2}) of the hard solid component can be measured according to the procedures specified above.

The content of the hard solid component in the curable composition B is not particularly limited and may be appropriately selected in accordance with, for example, the volume mean particle diameter of the hard solid component.

The content of the hard solid component when the curable composition B contains the hard solid component having a volume mean particle diameter of greater than 100 nm and 1,000 nm or less is preferably 10% by volume or less relative to the whole volume of the curable composition B. When the content of the hard solid component having a volume mean particle diameter of greater than 100 nm and 1,000 nm or less is 10% by volume or less relative to the whole volume of the curable composition B, it is possible to inhibit the viscosity of the curable composition B from being excessively high and obtain a curable composition suitable for inkjet discharging, and to inhibit reduction in the bindability of a matrix resin in a cured product B obtained by curing the curable composition B and inhibit the cured product B from becoming brittle as a result.

The content of the hard solid component when the curable composition B contains the hard solid component having a volume mean particle diameter of 10 nm or greater and 100 nm or less is preferably 60% by volume or less, more preferably 50% by volume or less, and yet more preferably 30% by volume or less relative to the whole volume of the curable composition B. When the content of the hard solid component having a volume mean particle diameter of 10 nm or greater and 100 nm or less is 60% by volume or less relative to the whole volume of the curable composition B, it is possible to inhibit the viscosity of the curable composition B from being excessively high and obtain a curable composition suitable for inkjet discharging, and to inhibit reduction in the bindability of a matrix resin in a cured product B obtained by curing the curable composition B and inhibit the cured product B from becoming brittle as a result. When the content of the hard solid component having a volume mean particle diameter of 10 nm or greater and 100 nm or less is 50% by volume or less relative to the whole volume of the curable composition B, it is possible to obtain a more stable inkjet dischargeability and cured product hardness.

The content of the hard solid component in the curable composition B is preferably 3% by volume or greater. When the content of the hard solid component is 3% by volume or greater relative to the whole volume of the curable composition B, it is possible to better reflect the properties of the hard solid component in the three-dimensional object. For example, when the silica, alumina, zirconia, or titanium oxide is used as the hard solid component and the content thereof is 3% by volume or greater relative to the whole volume of the curable composition B, it is possible to impart a high transparency and a high hardness to a cured product B obtained by curing the curable composition B. When the content of the hard solid component having a volume mean particle diameter of 10 nm or greater and 100 nm or less is 10% by volume or greater relative to the whole volume of the curable composition B, a better transparency and a better hardness can be obtained in a cured product B obtained by curing the curable composition B.

The upper limit and the lower limit of the content of the hard solid component in the curable composition B can be appropriately combined.

It is preferable that the curable composition A contains the hard solid component having a volume mean particle diameter of greater than 100 nm and 1,000 nm or less by an amount of 10% by mass or greater, and that the curable composition B contains the hard solid component having a volume mean particle diameter of greater than 100 nm and 1,000 nm or less by an amount of 10% by volume or less or the hard solid component having a volume mean particle diameter of 10 nm or greater and 100 nm or less by an amount of 60% by volume or less. This makes it possible to increase the absolute value of the total light transmittance difference between the cured product A and the cured product B and express a gradation property well, and to improve strength at the same time.

### <<Curing>>

In the base cured product producing step, either or both of the curable composition A and the curable composition B discharged by an inkjet method are cured in the base deposited region, to produce a based cured product. The curing is suitably performed by the curing performing unit.

In the present specification, "curing" means forming a polymer. However, "curing" is not limited to solidifying, but comprehends thickening, and simultaneous occurrence of solidifying and thickening.

The method for curing the curable composition A and the curable composition B is not particularly limited and may be appropriately selected in accordance with the intended purpose. Examples of the method include a method of curing the curable composition A and the curable composition B with active energy rays, a method of curing the curable composition A and the curable composition B by heating, and a method of curing the curable composition A and the curable composition B by bonding of reactive groups. Specifically, a base deposited region formed by deposition of either or both of the curable composition A and the curable composition B discharged by an inkjet method is irradiated with active energy rays corresponding to the kind of the polymerization initiator preferably contained in the curable composition A and the curable composition B, or is heated, or is allowed to undergo a chemical reaction corresponding to the kind of the polymerizable compound preferably contained in the curable composition A and the curable composition B. In this way, the curable composition A and the curable composition B can be cured.

Examples of the method of curing the curable composition A and the curable composition B by bonding of reactive groups include a method of curing the curable composition A and the curable composition B by bonding the reactive groups of the curable composition A and the curable composition B.

The reactive group is not particularly limited and may be appropriately selected in accordance with the intended purpose. Examples of the reactive group include an epoxy group, a hydroxy group, an amino group, and an isocyanate group.

Examples of the chemical reaction include: a chemical reaction when the curable composition A contains an epoxy compound and the curable composition B contains an alcohol; a chemical reaction when the curable composition A contains an epoxy compound and the curable composition B contains an amine; a chemical reaction when the curable composition A contains an isocyanate compound and the curable composition B contains an alcohol; and a chemical reaction when the curable composition A contains an isocyanate compound and the curable composition B contains an amine.

Among these methods, the method of curing the curable composition A and the curable composition B with active energy rays is preferable as the method for curing the curable composition A and the curable composition B.

The active energy rays used for curing the curable composition A and the curable composition B are not particularly limited and may be appropriately selected in accordance with the intended purpose. Light is preferable.

The light is not particularly limited and may be appropriately selected in accordance with the intended purpose so long as the light is able to give necessary energy for allowing polymerization reaction of the polymerizable compounds in the curable composition A and the curable composition B to proceed. Examples of the light include ultraviolet rays, electron beams, α-rays, β-rays, γ-rays, and X-rays. One of these kinds of light may be used alone or two or more of these kinds of light may be used in combination. Among these kinds of light, ultraviolet rays having a wavelength of from 220 nm through 400nm are preferable as the light.

In order to efficiently cure the curable composition A and the curable composition B, it is preferable that the polymerization initiator be contained in the curable composition A and the curable composition B. However, when a light source having a particularly high energy is used as the active energy rays, polymerization reaction can be allowed to proceed without a polymerization initiator.

The curing performing unit is not particularly limited and may be appropriately selected in accordance with the intended purpose so long as the curing performing unit can cure the curable composition A and the curable composition B discharged. Examples of the curing performing unit include an active energy ray irradiation unit, and a heating unit.

The active energy ray irradiation unit is not particularly limited and may be appropriately selected in accordance with the intended purpose. Examples of the active energy ray irradiation unit include a light-emitting diode (LED), a laser diode (LD), a high-pressure mercury lamp, an ultrahigh-pressure mercury lamp, and a metal halide.

The high-pressure mercury lamp is a point light source. A Deep UV-type high-pressure mercury lamp combined with an optical system and enhanced in light utilization efficiency can emit short wavelength ranges.

The metal halide is effective for colored materials because of its wide wavelength range. Halides of metals such as Pb, Sn, and Fe are used, and can be selected in accordance with the absorption spectrum of the polymerization initiator.

The lamp used for curing is not particularly limited and may be appropriately selected in accordance with the intended purpose. For example, commercially available lamps such as H LAMP, D LAMP, or V LAMP available from Fusion System Japan Co., Ltd. may also be used.

When ultraviolet rays are used as the active energy rays, mercury-free is preferred in terms of protection of environment. Therefore, replacement with Gallium Nitride (GaN)-based semiconductor ultraviolet light-emitting devices is preferred from industrial and environmental point of view. Furthermore, ultraviolet light-emitting diode (UV-LED) and ultraviolet laser diode (UV-LD) are preferable as curing devices for irradiating the curable composition A and the curable composition B with ultraviolet rays. Small sizes, long working life, high efficiency, and high cost performance make such irradiation sources desirable.

The heating unit is not particularly limited and may be appropriately selected in accordance with the intended purpose. Examples of the heating unit include a heater.

### <«Base cured product>»

The base cured product is a product obtained through curing of either or both of the curable composition A and the curable composition B. As described above, the base cured product may include a region formed only of a cured product A of the curable composition A, a region formed only of a cured product B of the curable composition B, and a region formed of a cured product of a mixture of the curable composition A and the curable composition B.

In the present specification, a "cured product (solidified product)" represents a polymer, but is not limited to a solid and comprehends a thickened product and a mixture of a solid and a thickened product.

The color of the base cured product is not particularly limited and may be appropriately selected in accordance with the intended purpose. It is possible to appropriately adjust the color of the base cured product by making selections and combinations of the hard solid component or the coloring material to be contained in the curable composition A, and the hard solid component or the coloring material to be contained in the curable composition B.

The absolute value of the difference between the total light transmittance through the cured product A of the curable composition A in the based cured product and the total light transmittance through the cured product B of the curable composition B in the base cured product is 10% or greater, and preferably 30% or greater. The upper limit of the absolute value of the difference between the total light transmittance through the cured product A and the total light transmittance through the cured product B is not particularly limited, may be appropriately selected in accordance with the intended purpose, and is preferably 48% or less in terms of strength. When the absolute value of the difference between the total light transmittance through the cured product A and the total light transmittance through the cured product B is less than 10%, gradations of a color cannot be expressed in the three-dimensional object.

In the base cured product producing step, it is possible to make the absolute value of the difference between the total light transmittance through the cured product A and the total light transmittance through the cured product B greater than or equal to 10%, by compositionally varying the curable composition A and the curable composition B.

For example, when the curable composition A contains the hard solid component, it is possible to make the absolute value of the difference between the total light transmittance through the cured product A and the total light transmittance through the cured product B greater than or equal to 10%, by making the curable composition B free of the hard solid component, or by varying at least any of the volume mean particle diameter, the refractive index, and the content of the hard solid component in the curable composition A from the corresponding one(s) of the volume average particle dimeter, the refractive index, and the content of the hard solid component in the curable composition B.

Conversely, when the curable composition B contains the hard solid component, it is possible to make the absolute value of the difference between the total light transmittance through the cured product A and the total light transmittance through the cured product B greater than or equal to 10%, by making the curable composition A free of the hard solid component, or by varying at least any of the volume mean particle diameter, the refractive index, and the content of the hard solid component in the curable composition B from the corresponding one(s) of the volume average particle dimeter, the refractive index, and the content of the hard solid component in the curable composition A.

### [Properties of cured product A]

The total light transmittance through the region formed only of the cured product A (i.e., the total light transmittance through the cured product A) is not particularly limited, may be appropriately selected in accordance with the intended purpose, and is preferably 35% or lower, and more preferably 25% or higher and 35% or lower. When the total light transmittance through the cured product A is 35% or lower, the absolute value of the difference between the total light transmittance through the cured product A and the total light transmittance through the cured product B tends to be greater than or equal to 10%, the cured product A tends to be white when the cured product A contains the hard solid component, and the cured product A tends to be a desired color when the cured product A contains the coloring material. When the total light transmittance through the cured product A is 25% or higher and 35% or lower, the cured product A has an even better strength.

To measure the total light transmittance, a region formed only of the cured product A may be cut out from the three-dimensional object, and the total light transmittance through the cut-out region may be measured using a DIRECT READING HAZEMETER (available from Toyo Seiki Seisaku-sho, Ltd.) according to JIS K7361-1 / HAZE :JIS K7136.

Examples of the method for cutting out the region formed only of the cured product A from the three-dimensional object and measuring the total light transmittance include a method of cutting the three-dimensional object with a metal file or by a cutting process into a processed product having a thickness of 1 mm, polishing both sides of the processed product with waterproof abrasive paper P600 or with anything of the same level, glossily polishing both sides of the processed product with alumina abrasive powder suspended in water and with felt, and measuring the total light transmittance through the resulting product.

Whatever size the processed product or the region formed only of the cured product A cut out from the three-dimensional object has or whatever measuring instrument is used, it is possible to measure the total light transmittance through the processed product, so long as the measurement includes the step of polishing both sides of the processed product with waterproof abrasive paper P600 or with anything of the same level, and glossily polishing both sides of the processed product with alumina abrasive powder suspended in water and with felt.

It is possible to measure the total light transmittance through the cured product A, also by producing a test piece of a three-dimensional object (a cured product A of the curable composition A) having an average thickness of 1 mm, and measuring the total light transmittance through the test piece in the direction of the thickness.

Specifically, it is possible to measure the total light transmittance by the method described below.

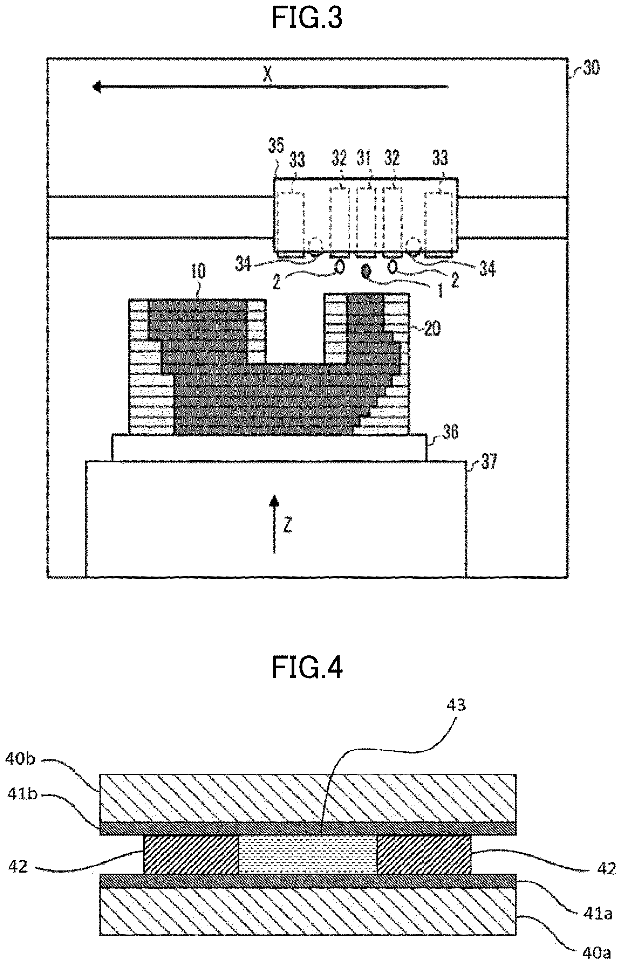

As illustrated in FIG. 4, an OHP sheet 41a is placed on a glass substrate 40a, and a silicon mold 42 (shape: a length of 20 mm on each side, and an average thickness of 1 mm) is tightly attached on the OHP sheet 41a. Next, the silicon mold 42 is filled with a curable composition 43 and covered with an OHP sheet 41b, which is further covered with a glass substrate 40b. Next, using an ultraviolet irradiator (device name: UNIJET E110Z HD_385 nm, having a wavelength of 385 nm, available from Ushio Inc.), the curable composition is irradiated with ultraviolet rays having an irradiation intensity of 200 mW/cm² for 5 minutes through the glass substrate 40b. Next, using the ultraviolet irradiator, the curable composition is irradiated with ultraviolet rays having an irradiation intensity of 500 mW/cm² for 5 minutes through the glass substrate 40a at the side opposite to the side irradiated with ultraviolet rays just before. Next, the OHP sheet 41b is peeled, and the test piece is taken out from the silicon mold 42 and left in a stationary state in an environment at a temperature of 23°C at a relative humidity of 50% for 24 hours, to obtain a test piece having an average thickness of 1 mm.

The total light transmittance (Tt) through the test piece produced above is measured using a DIRECT READING HAZEMETER (available from Toyo Seiki Seisaku-sho, Ltd.) according to JIS K7361-1 / HAZE :JIS K7136.

### [Properties of cured product B]

The total light transmittance through the region formed only of the cured product B (i.e., the total light transmittance through the cured product B) is not particularly limited, may be appropriately selected in accordance with the intended purpose, and is preferably 50% or higher, more preferably 60% or higher, and yet more preferably higher than 80% in order to obtain a high transparency. However, when strength of the cured product B is taken into consideration, the total light transmittance through the cured product B is preferably 80% or lower.

To measure the total light transmittance, a region formed only of the cured product B may be cut out from the three-dimensional object, and the total light transmittance through the cut-out region may be measured using a DIRECT READING HAZEMETER (available from Toyo Seiki Seisaku-sho, Ltd.) according to JIS K7361-1 / HAZE :JIS K7136. The specific method is the same as the method for measuring the total light transmittance through the cured product A.

It is preferable that the total light transmittance through the cured product A be 35% or lower and that the total light transmittance through the cured product B be 60% or higher, because a gradation property can be expressed even better.

As described above, the three-dimensional object has a continuously or stepwise changing total light transmittance, and may include a region formed only of the cured product A and a region only of the cured product B. Hence, all of the three-dimensional object in which the total light transmittance continuously changes throughout the whole of the three-dimensional object, the three-dimensional object including a region in which the total light transmittance is constant, and the three-dimensional object including a region in which the total light transmittance increases or decreases do not depart from the scope of the present disclosure.

### <Cured product C producing step and cured product C producing unit>

The cured product C producing step is a step of discharging the curable composition C containing a colorant by an inkjet method and curing the curable composition C, to produce a cured product C. The cured product C producing step is suitably performed by the cured product C producing unit.

A deposited region C formed by deposition of the curable composition C discharged in the cured product C producing step is smaller than a base deposited region formed by deposition of the curable composition A and the curable composition B discharged.

By the curable composition C being cured in the cured product C producing step, a colored region that exhibits a different color from that of a region formed of the base cured product can be formed in a model part.

The "color" can be expressed by the L*a*b* color space standardized by the International Commission on Illumination (CIE). In the L*a*b* color space, L* denotes luminosity, and a*b* denotes chromaticity, which is the indicator of hue and saturation. a*b* indicates color directions. a* indicates a direction toward red, -a* indicates a direction toward green, b* indicates a direction toward yellow, and -b* indicates a direction toward blue.

The cured product C producing unit is a unit configured to discharge the curable composition C containing a colorant by an inkjet method and cure the curable composition C, to produce a cured product C. The cured product C producing unit preferably includes a discharging unit and a curing performing unit, and further includes other members as needed.

One kind of a curable composition C may be used alone, or a plurality of curable compositions C containing coloring materials that develop different colors such as cyan (C), magenta (M), yellow (Y), and black (K) may be used. These curable compositions C may be used as a mixture.

### <<Discharging>>

In the cured product C producing step, first, the curable composition C is discharged by an inkjet method. The discharging is suitably performed by the discharging unit.

The discharging unit and the mode of discharging are the same as those in the based cured product producing step. Hence, descriptions of the discharging unit and the mode of discharging will be skipped.

In the cured product C producing step, the curable composition C is discharged in the form of a liquid droplet by the inkjet method and deposited, to form a deposited region. Deposited regions C may gather and form a liquid film.

In the present specification, a "deposited region C" represents a region formed by deposition of the curable composition C discharged to one voxel.

Hitherto, when producing a three-dimensional object by a material jetting method, it is necessary to form the height-direction shape of the three-dimensional object. Therefore, the amount (liquid droplet amount) of the curable composition discharged per unit area is greater than when forming a two-dimensional image by an inkjet method. Hence, when producing a colored three-dimensional object using the curable composition containing a coloring material and the base curable compositions serving as the base, discharging the curable composition containing a coloring material in approximately the same amount as the base curable compositions in accordance with existing methods tends to result in that a deposited region formed by the curable composition containing a coloring material being discharged and deposited becomes a broader region than intended due to bleeding. Here, the present inventors have found a problem that the colored region tends to have a poor printing accuracy.

In this regard, according to the three-dimensional object producing method of the present disclosure, the present inventors have found it possible to produce a three-dimensional object having an excellent printing accuracy in a colored region, by making the deposited region C, which is formed by the curable composition C being discharged and deposited, smaller than a base deposited region, which is formed by the curable composition A and the curable composition B being discharged by the inkjet method in the form of a liquid droplet and deposited.

In the present specification, "an excellent printing accuracy in a colored region" means a high visibility of the expressed part in the colored region. In the present specification, "visibility" represents a property indicating how easily something can be recognized or identified under the effect of light, and is not limited to a property indicating how easily something can be recognized by the faculty of sight, and comprehends, for example, a property indicating how easily something can be identified by a device that uses, for example, an optical device. Even if the colored region cannot be identified by a device that uses, for example, an optical device, the "colored region" is defined as "having an excellent printing accuracy" so long as the colored region is more recognizable by the faculty of sight than a colored region produced by an existing method.

Typically, color print jobs that need accuracy are seldom printed with white, but are printed with colors other than white, such as cyan (C), magenta (M), yellow (Y), and black (K). Hence, fineness (accuracy) of white is almost not demanded in color print jobs. Hence, by adjusting the whiteness (L*) of a three-dimensional object and the total light transmittance (Tt) through the three-dimensional object by using the curable composition A, of which a cured product A becomes white, and the curable composition B, of which a cured product B becomes transparent, and by adjusting the depositing position of the curable composition C containing a coloring material, it is possible to realize a highly accurate three-dimensional color (a*b*) expression in a base region in which a gradation property is expressed. Moreover, by using the hard solid component in the curable composition A, it is possible to impart a high strength to the three-dimensional object. By preferably using silica as the hard solid component, it is possible to satisfy both of a high whiteness and safety.

In the present specification, whether the deposited region C is smaller than the base deposited region is determined based on area. Specifically, an area that is recognized when the region formed by deposition of the curable composition C discharged to one voxel is seen in the plan view perspective in the discharging direction is deemed as the area of the deposited region C, an area that is recognized when the base deposited region formed by deposition of the curable composition A and the curable composition B discharged to one voxel is seen in the plan view perspective in the discharging direction is deemed as the area of the base deposited region, and whether the area of the deposited region C is smaller than the area of the base deposited region is determined.

When the base deposited region is formed of a deposited region A formed only of the curable composition A, the area of the deposited region C is smaller than the area of the deposited region A. When the base deposited region is formed of a deposited region B formed only of the curable composition B, the area of the deposited region C is smaller than the area of the deposited region B. When the base deposited region is formed of a deposited region formed of a mixture of the curable composition A and the curable composition B, the area of the deposited region C is smaller than the total area of the deposited region formed of a mixture of the curable composition A and the curable composition B.

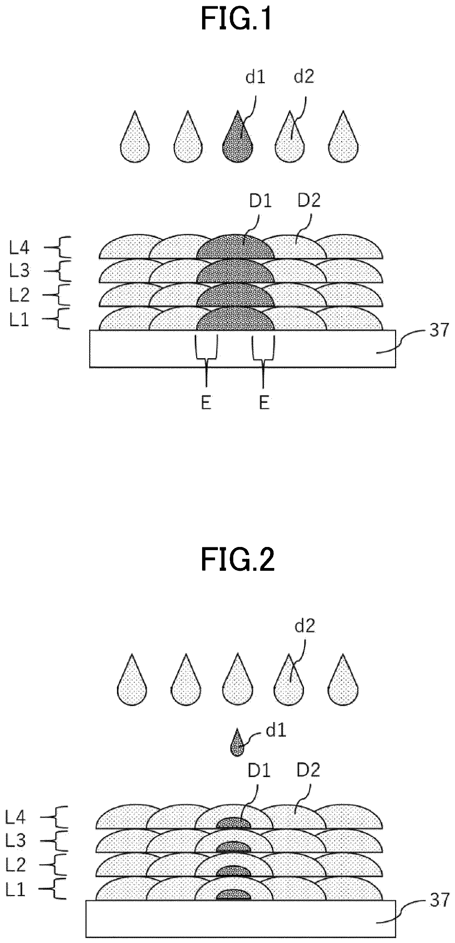

The reason why it is possible to produce a three-dimensional object having an excellent printing accuracy in a colored region because the deposited region C is smaller than the base deposited region will be described with reference to FIG. 1 and FIG. 2.

FIG. 1 is an exemplary view illustrating an example of an existing process for producing a colored three-dimensional object.

As illustrated in FIG. 1 as an example, when a liquid droplet d1 of the curable composition C is discharged onto the stage 37 toward the topmost layer L4 of a plurality of layers L1 to L4 (a laminate structure formed on the stage 37 by laminating L1, L2, L3, and L4 in this order from the stage 37) in a liquid droplet amount C that is approximately the same as the liquid droplet amount of a liquid droplet d2 formed of the curable composition A and the curable composition B, a deposited region C (D1) and a base deposited region (D2) that have approximately the same area are formed. However, broad bleeding regions E are formed at the ends of the deposited region C (D1). Hence, it is difficult to produce a three-dimensional object having an excellent printing accuracy in a colored region.

Meanwhile, when a colored three-dimensional object is produced by the object producing method of the present disclosure in which the deposited region C is smaller than the base deposited region, even if the deposited region C formed of the deposited curable composition C bleeds, the regions formed by the bleeding are small, and the colored region has an improved printing accuracy.

FIG. 2 is an exemplary view illustrating an example of a process for producing a colored three-dimensional object according to the present disclosure.

As illustrated in FIG. 2 as an example, when a liquid droplet d1 of the curable composition C is discharged to the topmost layer L4 of a plurality of layers L1 to L4 formed on a stage 37 in a liquid droplet amount C that is lower than the liquid droplet amount of a liquid droplet d2 formed of the curable composition A and the curable composition B, the deposited region C (D1) having an area smaller than that of the base deposited region (D2) is formed, and occurrence of bleeding regions at the ends of the deposited region C (D1) is inhibited. Hence, a three-dimensional object having an excellent printing accuracy in a colored region can be produced.

The three-dimensional object producing method and apparatus can obtain an excellent printing accuracy in a colored region even when, for example, applying image information having a minutely-defined shape such as a two-dimensional code to the three-dimensional object as the colored region. Hence, it is possible to produce a three-dimensional object to which a two-dimensional code having an excellent reading accuracy is applied.

In the present specification, a "layer" is a region in which a plurality of deposited region(s) C and base deposited region(s) that are positioned at approximately the same height are gathered. For example, a "layer" represents a region in which a plurality of either or both of deposited region(s) C and base deposited region(s) that are formed from when a predetermined operation (e.g., formation of the deposited region C, and, as needed, a smoothing step described below) is performed at a predetermined position P and before when the predetermined operation is performed next at a predetermined position P' (which is a position different only in the height direction from the predetermined position P) are gathered.

The area of the deposited region C is not particularly limited and may be appropriately selected in accordance with the intended purpose so long as the area of the deposited region C is smaller than the area of the base deposited region, and is preferably 50% or less, more preferably 40% or less, and yet more preferably 30% or less relative to the area of the base deposited region. When the area of the deposited region C is 50% or less relative to the area of the base deposited region, the printing accuracy in a colored region is better improved. The area of the deposited region C is preferably 50 or greater relative to the area of the base deposited region.

It is possible to make the area of the deposited region C smaller than the area of the base deposited region, by adjusting the liquid droplet amount C of the curable composition C and the total of the liquid droplet amount A of the curable composition A and the liquid droplet amount B of the curable composition B.

Specifically, it is preferable that the liquid droplet amount C (pL) of the curable composition C discharged be lower than the total (pL) of the liquid droplet amount A (pL) of the curable composition A discharged and the liquid droplet amount B (pL) of the curable composition B discharged, and more preferably 70% by volume or less and yet more preferably 50% by volume or less relative to the total of the liquid droplet amount A of the curable composition A discharged and the liquid droplet amount B of the curable composition B discharged. When the liquid droplet amount C of the curable composition C discharged is 70% by volume or less relative to the total of the liquid droplet amount A of the curable composition A discharged and the liquid droplet amount B of the curable composition B discharged, the printing accuracy in a colored region is better improved. The liquid droplet amount C of the curable composition C discharged is preferably 10% by volume or greater relative to the total of the liquid droplet amount A of the curable composition A discharged and the liquid droplet amount B of the curable composition B discharged.

It is preferable to perform the cured product C producing step in a manner that the deposited region C formed by the curable composition C being discharged by the inkjet method in the form of a liquid droplet and deposited and the base deposited region formed by the curable composition A and the curable composition B being discharged by the inkjet method in the form of a liquid droplet and deposited have an overlapping region in the same layer (i.e., in a manner that a colored region becomes a region in which the curable composition C is not present alone but is present together with either or both of the curable composition A and the curable composition B). When the deposited region C and the base deposited region have an overlapping region in the same layer, the base deposited regions are deployed throughout the three-dimensional object. As a result, an effect of improving the strength of the three-dimensional object and an effect of improving the object production accuracy of the three-dimensional object are obtained as compared with when the deposited region C and the base deposited region do not overlap in the same layer (i.e., when a colored region is formed only of the deposited region C smaller than the base deposited region).

When a colored region is large (for example, when a colored region is solid image-like), the strength of the three-dimensional object and the object production accuracy of the three-dimensional object tend to be poor unless the deposited region C and the base deposited region overlap in the same layer, so the effects obtained because the deposited region C and the base deposited region overlap in the same layer are more remarkable.

It is more preferable to perform the cured product C producing step in a manner that the base deposited region formed by the curable composition A and the curable composition B being discharged by the inkjet method in the form of a liquid droplet and deposited overlies the deposited region C formed by the curable composition C being discharged by the inkjet method in the form of a liquid droplet and deposited, to have an overlapping region above the deposited region C in the same layer. When the base deposited region overlies the deposited region C and has an overlapping region above the deposited region C in the same layer, a smoothing unit will not directly contact the deposited region C when the smoothing step described below is performed after the base deposited region is formed. Therefore, it is possible to further obtain an effect of inhibiting the printing accuracy in a colored region from being poor due to, for example, the deposited region C being drawn by the smoothing unit.

Specifically, as illustrated in FIG. 2 as an example, after a liquid droplet d1 of the curable composition C is discharged to the topmost layer L4 of the plurality of layers L1 to L4 formed on the stage 37, a liquid droplet d2 of either or both of the curable composition A and the curable composition B is further discharged onto the region to which the liquid droplet d1 of the curable composition C is discharged, to form a region in which the deposited region C (D1) and the base deposited region (D2) overlap in the same layer.

### <<<Curable composition C>>>

The curable composition C is a composition that can color a three-dimensional object (model part) in a color different from the color of a model part formed of the base cured product by curing. The curable composition C can be suitably used as an inkjet ink.

The curable composition C is not particularly limited and may be appropriately selected in accordance with the intended purpose so long as the curable composition C contains at least a coloring material and can form a polymer. The curable composition C preferably contains a polymerizable compound and further contains other components as needed.

Each component contained in the curable composition C will be described below. As the polymerizable compound and the other components except a hard solid component that are contained in the curable composition C, the same ones as those used in the curable composition A can be used in the same manner. Hence, descriptions of the polymerizable compound and the other components except a hard solid component will be skipped. Descriptions of the properties of the curable composition C will also be skipped because it is preferable that the properties of the curable composition C be the same as the properties of the curable composition A.

### -Coloring material-

The coloring material is contained in the curable composition C in order to form the colored region.

The coloring material is preferably a dye or a pigment that can dissolve or stably disperse in the curable composition C. A pigment is more preferable in terms of durability and safety.

As described above, in the present specification, a "pigment" is functionally distinguished from the hard solid component. The hard solid component is not comprehended within the pigment.

### --Pigment--

Inorganic pigments or organic pigments can be used as the pigment. One of the inorganic pigments or organic pigments may be used alone or two or more of the inorganic pigments or organic pigments may be used in combination. Moreover, a mixed crystal can also be used as the pigment.

The inorganic pigment is not particularly limited and may be appropriately selected in accordance with the intended purpose. Examples of the inorganic pigment include iron oxide, barium yellow, cadmium red, chrome yellow, and carbon black. One of these inorganic pigments may be used alone or two or more of these inorganic pigments may be used in combination.

The carbon black is not particularly limited and may be appropriately selected in accordance with the intended purpose. For example, carbon black produced by a publicly-known method such as a contact method, a furnace method, and a thermal method can be used.

The organic pigment is not particularly limited and may be appropriately selected in accordance with the intended purpose. Examples of the organic pigment include an azo-pigment, a polycyclic pigment, a dye chelate, a nitro pigment, a nitroso pigment, and aniline black. One of these organic pigments may be used alone or two or more of these organic pigments may be used in combination.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the dye chelate include a basic dye chelate and an acid dye chelate.

The volume mean particle diameter of the pigment is not particularly limited, may be appropriately selected in accordance with the intended purpose, and is preferably 10 nm or greater and 1,000 nm or less and more preferably 100 nm or greater and 500 nm or less in terms of dispersion stability of the pigment and image density of a colored region.

The volume mean particle diameter can be measured with, for example, a granularity analyzer (MICROTRAC MODEL UPA9340, available from Nikkiso Co., Ltd.).

### --Dye--

The dye is not particularly limited and may be appropriately selected in accordance with the intended purpose. Examples of the dye include an acid dye, a direct dye, a reactive dye, and a basic dye. One of these dyes may be used alone or two or more of these dyes may be used in combination.

The content of the coloring material is not particularly limited and may be appropriately selected in accordance with the intended purpose so long as the cured product C can be colored, and is preferably 0.1% by mass or greater and more preferably 0.1% by mass or greater and 10.0% by mass or less relative to the whole mass of the curable composition C. When the content of the coloring material is 0.1% by mass or greater, it is possible to sufficiently improve the image density of a colored region even when the amount of the curable composition C discharged is lower than the amount in typical object producing methods.

### -Other components-

### --Hard solid component--

The curable composition C may contain the hard solid component. However, it is preferable that the curable composition C be substantially free of the hard solid component, if possible. The reason is as follows. As described above, it is preferable that the curable composition C contains a pigment, which is a solid coloring material. When the curable composition C further contains the hard solid component as an additional solid component, it is necessary to explore the conditions under which the pigment and the hard solid component can both stably disperse in the curable composition C, and this increases difficulty involved in prescribing and producing the curable composition C.

In the present specification, "substantially free of" the hard solid component means that the curable composition C does not contain the hard solid component to an extent at which, for example, the properties of the hard solid component affect the curable composition C. It is preferable that the content of the hard solid component be less than 0.1% by mass relative to the whole mass of the curable composition C.

Hitherto, for example, dyes used by being dissolved in the curable composition or pigments used by being dispersed in the curable composition have been used as the coloring materials for coloring cured products by the material jetting method. Among these coloring materials, pigments are preferable in terms of durability and safety. However, in order to disperse a pigment in a curable composition, it is necessary to optimize the kind and the amount of the dispersant in accordance with the kind of the curable composition and the kind of the pigment. Problematically, this involves a lot of difficulty. Moreover, according to an existing method for producing an object using a color curable composition containing a coloring material, in order to obtain an object having a high strength, it is necessary to disperse a hard solid component such as an inorganic filler for improving strength in the color curable composition at the same time as dispersing a pigment, and this makes dispersing significantly difficult. Here, the present inventors have found a problem that a color and a high strength cannot be both satisfied, when a solid component is not added in the color curable composition.

Hence, when the curable composition C is free of the hard solid component, it is expected that a region (colored region) of a three-dimensional object to be formed of the curable composition C will have a poor strength. However, by the cured product C producing step being performed in a preferable manner that the cured product C contacts the base cured product in the same layer, or in a more preferable manner that, as described above, the deposited region C and the base deposited region have an overlapping region in the same layer, the base deposited regions formed by discharging and deposition of the curable composition A containing the hard solid component and the curable composition B containing the hard solid component are deployed throughout the three-dimensional object. As a result, it is possible to satisfy both of improving dispersion stability in the curable composition C and substantially preventing the strength of a colored region from being poor.

### <<Curing>>

The curable composition C discharged by an inkjet method in the cured product C producing step is cured in the deposited region C and produces a cured product C. The curing is suitably performed by the curing performing unit.

Descriptions of the method for curing the curable composition C and the curing performing unit will be skipped because it is preferable that the method for curing the curable composition C and the curing performing unit be the same as those in the base cured product producing step.

### <Cured product D producing step and cured product D producing unit>

The cured product D producing step is a step of discharging a curable composition D for support, which is for supporting the three-dimensional object, by an inkjet method and curing the curable composition D for support, to produce a cured product D for support. The cured product D for support producing step is suitably performed by the cured product D for support producing unit.

In the cured product D producing step, a support part for supporting the model part can be formed.

The cured product D producing unit is a unit configured to discharge a curable composition D for support, which is for supporting the three-dimensional object, by an inkjet method and cure the curable composition D for support, to produce a cured product D for support. The cured product D producing unit preferably includes a discharging unit and a curing performing unit, and further includes other members as needed.

### <<Discharging>>

In the cured product D producing step, first, the curable composition D for support is discharged by an inkjet method. The discharging is suitably performed by the discharging unit.

The discharging unit and the mode of discharging are the same as those in the base cured product producing step. Hence, descriptions of the discharging unit and the mode of discharging will be skipped.

In the cured product D producing step, the curable composition D for support is discharged by the inkjet method in the form of a liquid droplet and deposited, to form a deposited region (hereinafter, may be referred to as "deposited region D"). Deposited region D may gather and form a liquid film.

In the present specification, a "deposited region D" represents a region formed by deposition of the curable composition D for support discharged to one voxel.

It is optional whether to perform the cured product D producing step in the same scan in which the cured product C producing step is performed, or to perform the cured product D producing step in a different scan from the scan in which the cured product C producing step is performed. It is preferable to perform the cured product D producing step in the same scan in which the cured product C producing step is performed.

In general, it has been preferable to perform discharging of the curable composition for forming a model part and discharging of the curable composition for forming a support part in different scans in order to form an interface between the model part and the support part clearly. Therefore, at least two or more scans have been performed.

On the other hand, according to the three-dimensional object producing method of the present disclosure, although more kinds of curable compositions are used than are used in existing three-dimensional object producing methods because the curable composition A and the curable composition B are used as the curable compositions for forming a model part, the cured product C producing step and the cured product D producing step may be performed in the same scan because there are few or no cases where a deposited region C, which is a region formed of the curable composition C, and a deposited region D, which is a region formed of the curable composition D for support, contact each other directly and form an interface (e.g., because the base deposited region overlies the deposited region C and has an overlapping region above the deposited region C as illustrated in FIG. 2). Hence, in the three-dimensional object producing method of the present disclosure, it is possible to maintain productivity because it is possible to perform object production without changes in the number of scans from that of the existing methods, although the number of kinds of curable compositions for forming a model part increases from that of the existing methods.

### <<<Curable composition D for support>>>

The curable composition D for support is a composition, of which cured product D for support obtained by curing the curable composition D for support exhibits a disintegrability property when subjected to a support part removing treatment using, for example, water, as a property that enables the support part to be easily removed from a model part that has been produced. The curable composition D for support can be suitably used as an inkjet ink.

The curable composition D for support is not particularly limited so long as the curable composition D for support has the property specified above, and a publicly-known curable composition may be appropriately used. For example, the support material for a three-dimensional object production disclosed in, for example, Japanese Unexamined Patent Application Publication No. 2018-70731 may be used.

The support part can be suitably removed in a support part removing step by a support part removing unit both described below.

### <<Curing>>

In the cured product D producing step, the curable composition D for support that is discharged by an inkjet method is cured in the deposited region D and produces a cured product D. The curing is suitably performed by the curing performing unit

Descriptions of the method for curing the curable composition D and the curing performing unit will be skipped because it is preferable that the method for curing the curable composition D and the curing performing unit be the same as those in the base cured product producing step.

### <Other steps and other units>

The other steps are not particularly limited and may be appropriately selected in accordance with the intended purpose. Examples of the other steps include a smoothing step, a drying step, a repeating step, a support part removing step, and a control step.

The other units are not particularly limited and may be appropriately selected in accordance with the intended purpose. Examples of the other units include a smoothing unit, a drying unit, a support part removing unit, a control unit, a storage container, and a stage.

### <<Smoothing step and smoothing unit>>

The smoothing step is a step of scraping away any excessive components of: the base deposited region formed by the curable composition A and the curable composition B being discharged and deposited in the base cured product producing step; the deposited region C formed by the curable composition C being discharged and deposited in the cured product C producing step; and the deposited region D formed by the curable composition D for support being discharged and deposited in the cured product D for support producing step, to smooth the surfaces of the base deposited region, the deposited region C, and the deposited region D and form a layer. The smoothing step is suitably performed by the smoothing unit.

By the three-dimensional object producing method including the smoothing step, it is possible to flatten each deposited region formed by the deposition of each curable composition, and to secure average thickness accuracy and flatness of each layer of the object.

The smoothing unit is not particularly limited and may be appropriately selected in accordance with the intended purpose so long as the smoothing unit can smooth a layer of an object formed of each deposited region. Examples of the smoothing unit include a roller, a brush, and a blade. One of these smoothing units may be used alone or two or more of these smoothing units may be used in combination.

The smoothing step for the base deposited region, the smoothing step for the deposited region C, and the smoothing step for the deposited region D may be performed independently or may be performed simultaneously.

"Independently" means that the smoothing steps for the respective deposited regions may be performed alone.

It is preferable to perform the smoothing step for the base deposited region and the smoothing step for the deposited region C in the same scan.

However, as described above, because the deposited region C is smaller than the base deposited region and the smoothing unit does not directly contact the deposited region C, the deposited region C is substantially not smoothed, even if the smoothing step for the base deposited region and the smoothing step for the deposited region C are performed in the same scan.

In the present specification, the deposited region C "substantially not being smoothed" means that the deposited region C is not smoothed to an extent at which the visibility of the expression in a colored region of a three-dimensional object formed of the cured product C obtained by curing the deposited region C is affected.

In terms of productivity, it is preferable to perform the smoothing step for the base deposited region, the smoothing step for the deposited region C, and the smoothing step for the deposited region D in the same scan.

As described above, because there are few or no cases where the deposited region C and the deposited region D directly contact each other and form an interface in the cured product D producing step, the model part and the support part can be formed suitably even if the smoothing step for the deposited region C and the smoothing step for the deposited region D are performed in the same scan.

The smoothing step may be performed once each time a layer of the curable composition A, the curable composition B, and the curable composition C, and, as needed, the curable composition D is laminated, or may be performed once each time layers of the compositions are laminated two through fifty times.

### <<Drying step and drying unit>>

The drying step is a step of drying the layer formed in the base cured product producing step and the cured product C producing step, and, as needed, the cured product D for support producing step. The drying step is suitably performed by the drying unit.

The drying unit is not particularly limited. A publicly-known dryer such as a heater can be used.

The drying step may be performed once every time a layer of the curable composition A, the curable composition B, and the curable composition C, and, as needed, the curable composition D is laminated, or may be performed once every time from two through fifty layers of the compositions are laminated.

### <<Repeating step>>

The three-dimensional object producing method may repeat the base cured product producing step and the cured product C producing step, and, as needed, the other steps such as the cured product D for support producing step alone, or may repeat any combinations of a plurality of these steps in order. As a result, a three-dimensional object formed of a plurality of laminated layers is produced.

Repetition of the base cured product producing step, repetition of the cured product C producing step, and repetition of the cured product D for support producing step may be performed independently, but some of the operations included in the respective repeating steps (e.g., performing of curing in the base cured product producing step and performing of curing in the cured product C producing step) may be performed simultaneously.

### <<Support part removing step and support part removing unit>>

The support part removing step is a step of removing a support part from a three-dimensional object obtained by the three-dimensional object producing method. The support part removing step is suitably performed by the support part removing unit.

The method for removing the support part is not particularly limited and may be appropriately selected in accordance with the intended purpose. Examples of the method include physical removal and chemical removal.

The physical removal is a method of applying a mechanical force to remove the support part.

The chemical removal is a method of disintegrating and removing the support part by immersion in a solvent.

Of these methods, the chemical removing method is more preferable as the method for removing the support part because the object may be broken by the physical removal. Moreover, when costs are taken into consideration, a removing method by immersion in water is more preferable. When the removing method by immersion in water is employed, a curable composition D for support, of which cured product has water disintegrability, is selected.

The support part removing unit is not particularly limited and may be appropriately selected in accordance with the composition and disintegrability of the curable composition D for support. Examples of the support part removing unit include a water jet device that can apply a mechanical force, and a container storing a solvent.

### <<Control step and control unit>>

The control step is a step of controlling the operations in each step of the three-dimensional object producing method, specifically, the base cured product producing step, the cured product C producing step, the cured product D for support producing step, and the other steps in order to perform the three-dimensional object producing method.

The control unit is a unit configured to control the operations of each unit of the three-dimensional object producing apparatus, specifically, the base cured product producing unit, the cured product C producing unit, the cured product D for support producing unit, and the other units in order to perform the three-dimensional object producing method. The control unit preferably includes a memory unit and a calculating unit.

The memory unit of the control unit is not particularly limited and may be appropriately selected in accordance with the intended purpose. Examples of the memory unit include main memories such as a Random Access Memory (RAM) and a Read Only Memory (ROM), and auxiliary memories such as a Hard Disk Drive (HDD) and a Solid State Drive (SDD).

The calculating unit of the control unit is not particularly limited and may be appropriately selected in accordance with the intended purpose. Examples of the calculating unit include a Central Processing Unit (CPU) and a Field Programmable Gate Array (FPGA).

### <<Storage container>>

The curable composition A, the curable composition B, the curable composition C, and the curable composition D for support may be stored in storage containers independently.

"Independently" means that each curable composition may be stored alone, or that two or more compositions may be stored in combination. It is preferable that each curable composition be stored alone.

That is, the storage container represents a container in the state of storing at least any of the curable composition A, the curable composition B, the curable composition C, and the curable composition D for support.

The storage container can be used as a cartridge or a bottle. Therefore, users can avoid direct contact with each curable composition during operations such as conveyance or replacement, so that fingers and clothes are prevented from contamination. Furthermore, inclusion of foreign matters such as dust in each curable composition can be prevented.

The container can be of any size, any form, and any material. For example, the container can be designed for a particular application. It is preferable to use a light blocking material to block the light or cover a container with a light blocking sheet, etc.

### <<Stage>>

The stage represents a table on which layers are laminated to produce a three-dimensional object.

The stage may be movable by, for example, a motor, and may be able to move upward and downward.

In the present specification, the "stage" may be referred to as "object production stage" or "object production table".

The shape of the stage is not particularly limited and may be appropriately selected in accordance with the intended purpose. A planar shape is preferable.

An example of the three-dimensional object producing apparatus of the present disclosure will be described in detail below with reference to FIG. 3. The subject matter of the present disclosure is not limited to this example.

FIG. 3 is a schematic view illustrating an object producing apparatus according to an embodiment of the three-dimensional object producing apparatus of the present disclosure. The object producing apparatus 30 includes head units 31 and 32 serving as the discharging unit, ultraviolet irradiators 33 serving as the curing performing unit, rollers 34, a carriage 35, and a stage 37. The head unit 31 is configured to discharge the curable composition A, the curable composition B, and the curable composition C independently (in FIG. 3, a liquid droplet of the curable composition A discharged, of the curable composition B discharged, and of the curable composition C discharged is denoted by a reference numeral 1). The head units 32 are configured to discharge liquid droplets 2 of the curable composition D for support. The rollers 34 are configured to smooth liquid films on the deposited regions formed by the curable composition A, the curable composition B, and the curable composition C, and the curable composition D for support. The ultraviolet irradiators 33 are configured to cure the curable composition A, the curable composition B, and the curable composition C, and the curable composition D for support that are discharged, by irradiation with ultraviolet rays. The carriage 35 is configured to move the respective units such as the head units 31 and 32 in a go-and-return manner in the X direction of FIG. 3. The stage 37 is configured to move a substrate 36 in the Z direction indicated in FIG. 3 and in the Y direction, which is a direction perpendicular to the sheet of FIG. 3.

Instead of the stage 37, the carriage 35 may be configured to move in the Y direction.

FIG. 3 illustrates only one head unit 31. However, at least two head units 31 storing the curable composition A and the curable composition B respectively may be provided. Moreover, when one curable composition C containing a coloring material or a plurality of curable compositions C containing different coloring materials are used as needed, the head unit 31 is configured to be able to discharge the inks of the respective colors independently.

As the nozzles of the head units 31 and 32, nozzles of a publicly-known inkjet printer can be suitably used.

Examples of metals that can be used as the rollers 34 include SUS 303, 400, and 60 series, hexavalent chromium, silicon nitride, and tungsten carbide. Any of these metals may be coated with, for example, fluorine or silicone and used as the rollers 34. Among these metals, SUS 600 series are preferable in terms of strength and processability.

When applying the rollers 34, the object producing apparatus 30 laminates layers while moving down the stage 37 in accordance with the number of times layers are laminated in order to keep a constant gap between the rollers 34 and the surface of the object. In a preferred configuration, the rollers 34 are disposed near the ultraviolet irradiators 33.

The object producing apparatus 30 may have measures against drying of the inks during a halt of the operation, such as caps for closing the nozzles of the head units 31 and 32. Moreover, the object producing apparatus 30 may include a maintenance mechanism configured to maintain the heads in order to inhibit clogging of the nozzles through a long-lasting use.

Next, a step of forming a colored region in a model part, which is performed by the three-dimensional object producing apparatus, will be described.

While moving the carriage 35 or the stage 37, the engine of the object producing apparatus 30 causes the head unit 31 to discharge liquid droplets of the curable composition A (free of a coloring material), the curable composition B (free of a coloring material), and curable composition C (containing a coloring material), and causes the head units 32 to discharge liquid droplets of the curable composition D for support in the same scan in which the liquid droplets of the curable composition A, the curable composition B, and the curable composition C are discharged, based on two-dimensional image data representing the cross-section of the bottommost layer among input two-dimensional image data. Subsequently, the engine of the object producing apparatus 30 causes the head unit 31 to discharge liquid droplets of the curable composition A and the curable composition B in a scan subsequent to the scan in which the liquid droplets of the curable composition A, the curable composition B, and the curable composition C are discharged and the liquid droplets of the curable composition D for support are discharged. As a result, the liquid droplets of the curable composition C (containing a coloring material), and of the curable composition A (free of a coloring material) and the curable composition B (free of a coloring material) are deployed at the positions corresponding to the pixels indicating a model part in the two-dimensional image data representing the cross-section of the bottommost layer, the liquid droplets of the curable composition D for support are deployed at the positions corresponding to the pixels indicating support parts in the data, and a liquid film in which the liquid droplets of adjoining positions contact each other is formed.

It is preferable to install heaters in the head units 31 and 32. It is also preferable to install pre-heaters on paths through which the curable composition A, the curable composition B, and the curable composition C are independently supplied to the head unit 31 and on a path through which the curable composition D for support is supplied to the head units 32.

The smoothing step is a step of scraping away any excessive components of, for example, the curable composition A, the curable composition B, the curable composition C, and the curable composition D for support that are discharged onto the stage 37, using the rollers 34, which are an example of the smoothing unit, to smooth the surfaces of the curable composition A, the curable composition B, the curable composition C, and the curable composition D for support and form a layer. The smoothing step may be performed once every time a layer of the curable composition A, the curable composition B, the curable composition C, and the curable composition D is laminated in the Z-axis direction, or may be performed once every time layers are laminated a plurality of times as described above. In the smoothing step, the rollers 34 may be stopped or may rotate at a positive or negative relative speed with respect to the travelling direction of the stage 37. The rotation speed of the rollers 34 may be a constant speed, a constant acceleration, or a constant deceleration. The number of rotations of the rollers 34 expressed as the absolute value of the relative speed with respect to the stage 37 is preferably 50 mm/s or greater and 400 mm/s or less. When the relative speed is extremely low, smoothing is insufficient and smoothness is spoiled. When the relative speed is extremely high, a large-sized apparatus is needed, liquid droplets discharged may fall out of place due to, for example, vibration, and smoothness may be spoiled as a result. In the smoothing step, it is preferable that the rotation direction of the rollers 34 be opposite to the travelling direction of the head units 31 and 32.

When performing curing in each of the base cured product producing step, the cured product C producing step, and the cured product D for support producing step, the engine of the object producing apparatus 30 causes the carriage 35 to move the ultraviolet irradiators 33 to emit ultraviolet rays corresponding to the wavelength of the photopolymerization initiator contained in the curable composition A, the curable composition B, the curable composition C, and the curable composition D. Through this operation, the object producing apparatus 30 cures the liquid film and forms a layer.

After the bottommost layer is formed, the engine of the object producing apparatus 30 moves the stage down by a distance corresponding to the thickness of one layer.

While moving the carriage 35 or the stage 37, the engine of the object producing apparatus 30 causes the head unit 31 to discharge a liquid droplet of the curable composition C containing a coloring material, and causes the head units 32 to discharge liquid droplets of the curable composition D for support in the same scan in which the liquid droplet of the curable composition C is discharged, based on two-dimensional image data representing the second cross-section from the bottom. Subsequently, the engine of the object producing apparatus 30 causes the head unit 31 to discharge a liquid droplet of either or both of the curable composition A and the curable composition B in a scan subsequent to the scan in which the liquid droplet of the curable composition C is discharged and the liquid droplets of the curable composition D for support are discharged. As a result, a liquid film having the cross-sectional shape represented by the second two-dimensional image data from the bottom is formed on the bottommost layer. Then, the engine of the object producing apparatus 30 causes the carriage 35 to move the ultraviolet irradiators 33 to irradiate the liquid film with ultraviolet rays, to cure the liquid film and form the second layer from the bottom on the bottommost layer.

The engine of the object producing apparatus 30 repeats forming and curing of a liquid film in the same manner as described above using the input two-dimensional image data in the order of data closer to the bottom, to laminate a plurality of layers. The number of times to repeat varies depending on the number of the input two-dimensional image data or, for example, the height and shape of the three-dimensional model. When object production using all of the two-dimensional image data is completed, a model part object 10 in a state of being supported by support parts 20 is obtained.

The object produced by the object producing apparatus 30 includes the model part 10 and the support parts 20. The support parts 20 are removed from the object by, for example, a physical removing method or a chemical removing method after object production.

### [Physical properties of three-dimensional object]

The difference between the total light transmittance through a portion, of a three-dimensional object produced by the three-dimensional object producing method and the three-dimensional object producing apparatus, through which the total light transmittance is the highest and the total light transmittance through a portion, of the three-dimensional object, through which the total light transmittance is the lowest is 10% or greater and preferably 30% or greater.

This is because the absolute value of the difference between the total light transmittance through a cured product A of the curable composition A and the total light transmittance through a cured product B of the curable composition B is 10% or greater.

The portion through which the total light transmittance is the highest is not particularly limited and may be appropriately selected in accordance with the intended purpose. Examples of the portion include a region formed only of the cured product B, and a region formed of a cured product in which the cured product A and the cured product B are mixed (i.e., a region formed of a cured product obtained by curing the curable composition A and the curable composition B that are mixed in their liquid states).

The portion through which the total light transmittance is the lowest is not particularly limited and may be appropriately selected in accordance with the intended purpose. Examples of the portion include a region formed only of the cured product A, and a region formed of a cured product in which the cured product A and the cured product B are mixed (i.e., a region formed of a cured product obtained by curing the curable composition A and the curable composition B that are mixed in their liquid states).

When the absolute value of the difference between the total light transmittance through the cured product A and the total light transmittance through the cured product B is less than 10%, color gradations cannot be expressed in the three-dimensional object.

Mechanical properties of a three-dimensional object produced by the three-dimensional object producing method and the three-dimensional object producing apparatus are not particularly limited. However, it is preferable that the three-dimensional object has bending strength, tensile strength, extensibility, heat resistance, or impact resistance as specified below.

The bending strength of the three-dimensional object is preferably 100 MPa or greater and more preferably greater than 120 MPa.

The bending strength represents the maximum stress at a breaking point in a plot of stress that is measured with respect to the amount of strain by using a universal tester (AUTOGRAPH, model No. AG-I, available from Shimadzu Corporation), a load cell for 1 kN, and a three-point bending jig, and displacing the load point at a speed of 1 mm/minute while the distance between the fulcrums is set to 24 mm.

It is possible to measure the bending strength by producing a test piece of a three-dimensional object (i.e., a test piece of a cured product of the curable composition) having a rectangular shape having a size of 10 mm × 40 mm × 1 mm, and measuring the bending strength of the test piece.

Specifically, the bending strength can be measured by the method described below.

The test piece to be used to evaluate the bending strength is produced in the same manner as in the production of the test piece used to evaluate the total light transmittance, except that unlike in the production of the test piece used to evaluate the total light transmittance, the shape of the silicon mold is changed from the shape having a length of 20 mm on each side and an average thickness of 1 mm to a shape having a length of 40 mm, a width of 10 mm, and an average thickness of 1 mm.

A universal tester (AUTOGRAPH, model No. AG-I, available from Shimadzu Corporation), a load cell for 1 kN, and a three-point bending jig are applied to each obtained three-dimensional object having a rectangular shape having a size of 10 mm × 40 mm × 1 mm. Stress that occurs when the load point is displaced at a speed of 1 mm/minute while the distance between the fulcrums is set to 24 mm is plotted with respect to the amount of strain, and the stress at the breaking point is determined as the maximum stress (bending strength).

When measuring the bending strength from the three-dimensional object, the three-dimensional object may be processed to a thickness of 1 mm by a metal file or by cutting, and the bending strength of the processed product may be measured.

As the tensile strength of the three-dimensional object, the maximum tensile stress is preferably 10 MPa or greater and more preferably 30 MPa or greater.

The tensile strength represents a strength measured by a tensile test (e.g., JIS K7161, JIS K7113, ISO 527, and ASTM D638) .

As the extensibility of the three-dimensional object, the tensile elongation at break is preferably 3% or greater and more preferably 8% or greater.

The extensibility represents an extensibility measured by a tensile test (e.g., JIS K7161, JIS K7113, ISO 527, and ASTM D638) .

As the heat resistance of the three-dimensional object, the deflection temperature (HDT) under load is preferably 50°C or higher.

The heat resistance represents a heat resistance measured by a deflection temperature (HDT) under load test (e.g., JIS K7191-1, and ASTM D648).

As the impact resistance of the three-dimensional object, the Izod impact strength is preferably 20 J/m or higher, and more preferably 40 J/m or higher.

The impact resistance represents an impact resistance measured by an Izod impact test (e.g., JIS K 7110, ISO 180, and ASTM D256).

The three-dimensional object produced by the three-dimensional object producing method of the present disclosure and the three-dimensional object producing apparatus is an expression of color gradations, preferably a suitable expression of gradations including whiteness and transparency, and of gloss, and more preferably a model part having a high strength and including a desired colored region that is highly accurately formed. Therefore, the three-dimensional object can be suitably used as, for example, dental materials such as artificial teeth, eyeglass frames, shoe outsoles and middle soles, grips such as wheel grips, hearing aids, earphones, denture bases, and prosthetic limbs.

### (Artificial tooth object producing method and artificial tooth object producing apparatus)

An artificial tooth object producing method of the present disclosure is a method for producing an artificial tooth object using a set of base curable compositions including a curable composition A and a curable composition B, and using a curable composition C, and includes a base cured product producing step of discharging either or both of the curable composition A and the curable composition B by an inkjet method and curing either or both of the curable composition A and the curable composition B, to produce a base cured product, and a cured product C producing step of discharging the curable composition C containing a coloring material by an inkjet method and curing the curable composition C, to produce a cured product C. A deposited region C formed by deposition of the curable composition C discharged is smaller than a base deposited region formed by deposition of the curable composition A and the curable composition B discharged. The absolute value of the difference between the total light transmittance through a cured product A of the curable composition A and the total light transmittance through a cured product B of the curable composition B is 10% or greater.

In addition to the base cured product producing step and the cured product C producing step, the artificial tooth object producing method preferably includes a cured product D for support producing step, and further includes other steps as needed. The artificial tooth object producing method is suitably performed by an artificial tooth object producing apparatus of the present disclosure.

An artificial tooth object producing apparatus of the present disclosure is an apparatus configured to produce an artificial tooth object using a set of base curable compositions including a curable composition A and a curable composition B, and using a curable composition C, and includes a base cured product producing unit configured to discharge either or both of the curable composition A and the curable composition B by an inkjet method and cure either or both of the curable composition A and the curable composition B, to produce a base cured product, and a cured product C producing unit configured to discharge the curable composition C containing a coloring material by an inkjet method and cure the curable composition C, to produce a cured product C. A deposited region C formed by deposition of the curable composition C discharged is smaller than a base deposited region formed by deposition of the curable composition A and the curable composition B discharged. The absolute value of the difference between the total light transmittance through a cured product A of the curable composition A and the total light transmittance through a cured product B of the curable composition B is 10% or greater.

In addition to the base cured product producing unit and the cured product C producing unit, the artificial tooth object producing apparatus preferably includes a cured product D for support producing unit, and further includes other units as needed.

In the present specification, an "artificial tooth" represents a tooth that is formed artificially to be used in order to restore the function of a natural tooth that is lost due to, for example, dental caries, trauma, and gum disease, and a laminate that is attached to the surface of a natural tooth in order to improve aesthetics.

Examples of a part of the tooth include an inlay, an onlay, a crown, and a bridge.

Examples of the whole of the tooth include an implant, and a denture such as a false tooth.

The artificial tooth object producing method and the artificial tooth object producing apparatus can be carried out in the same manner as the method or the elements of the apparatus specified under (Three-dimensional object producing method and three-dimensional object producing apparatus), except that the configurations of the method or the apparatus specified under (Three-dimensional object producing method and three-dimensional object producing apparatus) are rearranged to change the shape of the three-dimensional object to the shape of a part or the whole of a tooth.

The method for rearranging the configurations of the method or the apparatus specified under (Three-dimensional object producing method and three-dimensional object producing apparatus) to change the shape of the three-dimensional object to the shape of a part or the whole of a tooth is not particularly limited and may be appropriately selected in accordance with the intended purpose. Examples of the method include a method of generating two-dimensional image data representing the shape of a part or the whole of a tooth, which is the target of production, and performing each step in the same manner as performed in the method or as performed by the elements of the apparatus specified under (Three-dimensional object producing method and three-dimensional object producing apparatus) based on the two-dimensional image data.

It is possible to appropriately design the two-dimensional image data according to the intended shape of the artificial tooth object.

### (Curable composition set)

A curable composition set of the present disclosure includes at least a curable composition A, a curable composition B, and a curable composition C, and preferably includes a curable composition D for support, and further includes other components as needed.

The curable composition set is suitably used as an ink set to be used in a material jetting method.

Descriptions of the curable composition A, the curable composition B, the curable composition C, and the curable composition D for support will be skipped because they are the same as specified under (Three-dimensional object producing method and three-dimensional object producing apparatus).

In a preferable case that can be assumed based on the specified particulars, the curable composition A contains a polymerizable compound and a hard solid component having a volume mean particle diameter of greater than 100 nm and 1,000 nm or less by an amount of 10% by volume or greater, the curable composition B contains a polymerizable compound and a hard solid component, the hard solid component having a volume mean particle diameter of greater than 100 nm and 1,000 nm or less and being contained by an amount of 10% by volume or less, or having a volume mean particle diameter of 10 nm or greater and 100 nm or less and being contained by an amount of 60% by volume or less, and the curable composition C contains a polymerizable compound and a coloring material.

In the present specification, what only matters to the "curable composition set" is separate existence of the curable composition A, the curable composition B, the curable composition C, and the curable composition D for support. For example, the curable composition set is not limited to, for example, a manufactured product or a sold product in a state in which a curable composition A storage unit storing the curable composition A, a curable composition B storage unit storing the curable composition B, a curable composition C storage unit storing the curable composition C, and a curable composition D for support storage unit storing the curable composition D for support are combined. For example, even if the curable composition A storage unit, the curable composition B storage unit, the curable composition C storage unit, and the curable composition D for support storage unit are, for example, separate manufactured or sold products, they are comprehended within the curable composition set according to the present disclosure so long as combined use of the curable composition A, the curable composition B, the curable composition C, and the curable composition D for support is assumed, or combined use of the curable composition A, the curable composition B, the curable composition C, and the curable composition D for support is substantially invited.

### Examples

The present disclosure will be specifically described below by way of Preparation Examples, Test Examples, and Examples. The present disclosure should not be construed as being limited to these Preparation Examples, Test Examples, and Examples.

### (Preparation Example 1: Preparation of monomer blend liquid)

Bifunctional ethoxylated bisphenol A dimethacrylate (product name: NK ESTER BPE-100, obtained from Shin-Nakamura Chemical Co., Ltd.) (60 parts by mass), and bifunctional triethylene glycol dimethacrylate (product name: NK ESTER 3G, obtained from Shin-Nakamura Chemical Co., Ltd.) (40 parts by mass) were uniformly mixed. Next, to the resulting product, diphenyl (2,4,6-trimethylbenzoyl)phosphine oxide (product name: OMNIRAD TPO, obtained from BASF GmbH) (5 parts by mass) serving as a photopolymerization initiator, and p-methoxyphenol (MEHQ, obtained from FUJIFILM Wako Pure Chemical Corporation, Wako First Grade) (0.05 parts by mass) were added. The resulting product was uniformly mixed, to obtain a monomer blend liquid.

### (Preparation Example 2: Preparation of titanium oxide mill base)

Titanium oxide (product name: JR-806, obtained from Tayca Co., Ltd. having a silica existence percentage of 3% by mass and an alumina existence percentage of 1% by mass, and a volume mean particle diameter of 250 nm) (50 parts by mass), a dispersant (product name: SOLSPERSE 24000GR, obtained from Lubrizol Corporation) (2.5 parts by mass), 2-hydroxy-3-phenoxypropyl acrylate (product name: ARONIX (registered trademark) M5700, obtained from Toagosei Company, Limited) (7.5 parts by mass), adduct of 1,6 hexanediol diacrylate with ethylene oxide (35.2 parts by mass), and 3-methoxybutyl acrylate (4.8 parts by mass) were stirred and mixed for 1 hour with a stirrer, and then treated for 4 hours with a bead mill, to produce a titanium oxide mill base.

### (Preparation Example 3-1: Preparation of white curable composition A1)

The monomer blend liquid obtained in Preparation Example 1, and silica particles (product name: ADMAFINE SC2500-SMJ, obtained from Admatechs Co., Ltd., having a volume mean particle diameter of 500 nm) serving as a hard solid component were uniformly mixed in a manner that the volume ratio "monomer blend liquid : silica particles" would be 90:10. Next, the resulting product was passed through a filter (product name: CCP-FX-C1B, obtained from ADVANTEC CO., LTD., having an average pore diameter of 3 µm), to obtain a "white curable composition A1".

### (Preparation Example 3-2: Preparation of white curable composition A2)

The monomer blend liquid obtained in Preparation Example 1, and silica particles (product name: ADMAFINE K180SM-C5, obtained from Admatechs Co., Ltd., having a volume mean particle diameter of 180 nm) serving as a hard solid component were uniformly mixed in a manner that the volume ratio "monomer blend liquid : silica particles" would be 70:30. Next, the resulting product was passed through a filter (product name: CCP-FX-C1B, obtained from ADVANTEC CO., LTD., having an average pore diameter of 3 µm), to obtain a "white curable composition A2".

### (Preparation Example 3-3: Preparation of white curable composition A3)

The monomer blend liquid obtained in Preparation Example 1, and silica particles (product name: ADMAFINE SC2500-SMJ, obtained from Admatechs Co., Ltd., having a volume mean particle diameter of 500 nm) serving as a hard solid component were uniformly mixed in a manner that the volume ratio "monomer blend liquid : silica particles" would be 70:30. Next, the resulting product was passed through a filter (product name: CCP-FX-C1B, obtained from ADVANTEC CO., LTD., having an average pore diameter of 3 µm), to obtain a "white curable composition A3".

### (Preparation Example 3-4: Preparation of white curable composition A4)

The monomer blend liquid obtained in Preparation Example 1, and the titanium oxide mill base obtained in Preparation Example 2 were uniformly mixed in a manner that the volume ratio "monomer blend liquid : titanium oxide mill base" would be 99:1. Next, the resulting product was passed through a filter (product name: CCP-FX-C1B, obtained from ADVANTEC CO., LTD., having an average pore diameter of 3 µm), to obtain a "white curable composition A4".

### (Preparation Example 3-5: Preparation of white curable composition A5)

The monomer blend liquid obtained in Preparation Example 1, and the titanium oxide mill base obtained in Preparation Example 2 were uniformly mixed in a manner that the volume ratio "monomer blend liquid : titanium oxide mill base" would be 90:10. Next, the resulting product was passed through a filter (product name: CCP-FX-C1B, obtained from ADVANTEC CO., LTD., having an average pore diameter of 3 µm), to obtain a "white curable composition A5".

### (Preparation Example 4-1: Preparation of transparent curable composition B1)

The monomer blend liquid obtained in Preparation Example 1 was passed through a filter (product name: CCP-FX-C1B, obtained from ADVANTEC CO., LTD., having an average pore diameter of 3 µm), to obtain a "transparent curable composition B1".

### (Preparation Example 4-2: Preparation of transparent curable composition B2)

The monomer blend liquid obtained in Preparation Example 1, and silica particles (product name: ADMANANO YA100C-SM2, obtained from Admatechs Co., Ltd., having a volume mean particle diameter of 100 nm) serving as a hard solid component were uniformly mixed in a manner that the volume ratio "monomer blend liquid : silica particles" would be 70:30. Next, the resulting product was passed through a filter (product name: CCP-FX-C1B, obtained from ADVANTEC CO., LTD., having an average pore diameter of 3 µm), to obtain a "transparent curable composition B2".

### (Preparation Example 4-3: Preparation of transparent curable composition B3)

The monomer blend liquid obtained in Preparation Example 1, and silica particles (product name: ADMAFINE K180SM-C5, obtained from Admatechs Co., Ltd., having a volume mean particle diameter of 180 nm) serving as a hard solid component were uniformly mixed in a manner that the volume ratio "monomer blend liquid : silica particles" would be 90:10. Next, the resulting product was passed through a filter (product name: CCP-FX-C1B, obtained from ADVANTEC CO., LTD., having an average pore diameter of 3 µm), to obtain a "transparent curable composition B3".

### (Preparation Example 4-4: Preparation of transparent curable composition B4)

The monomer blend liquid obtained in Preparation Example 1, and silica particles (product name: ADMANANO YA10C-SM1, obtained from Admatechs Co., Ltd., having a volume mean particle diameter of 10 nm) serving as a hard solid component were uniformly mixed in a manner that the volume ratio "monomer blend liquid : silica particles" would be 90:10. Next, the resulting product was passed through a filter (product name: CCP-FX-C1B, obtained from ADVANTEC CO., LTD., having an average pore diameter of 3 µm), to obtain a "transparent curable composition B4".

### (Preparation Example 4-5: Preparation of transparent curable composition B5)

The monomer blend liquid obtained in Preparation Example 1, and silica particles (product name: ADMANANO YA100C-SM2, obtained from Admatechs Co., Ltd., having a volume mean particle diameter of 100 nm) serving as a hard solid component were uniformly mixed in a manner that the volume ratio "monomer blend liquid : silica particles" would be 40:60. Next, the resulting product was passed through a filter (product name: CCP-FX-C1B, obtained from ADVANTEC CO., LTD., having an average pore diameter of 3 µm), to obtain a "transparent curable composition B5".

### (Preparation Example 5: Preparation of color curable composition C1)

Isobornyl acrylate (obtained from Osaka Organic Chemical Industry Ltd.) (65 parts by mass), polyethylene glycol #600 acrylate (product name: NK ESTER A-600, obtained from Shin-Nakamura Chemical Co., Ltd.) (24 parts by mass), and a urethane acrylate oligomer (product name: SHIKOH, grade: UV-6630B, obtained from Mitsubishi Chemical Corporation) (11 parts by mass) were uniformly mixed. Next, to the resulting product, diphenyl (2,4,6-trimethylbenzoyl)phosphine oxide (product name: OMNIRAD TPO, obtained from BASF GmbH) (4 parts by mass) serving as a photopolymerization initiator was added, and the resulting product was uniformly mixed. Next, to the resulting product, carbon black (product name: MHI BLACK #220, obtained from Mikuni Color Ltd.) was added in a manner that the content of carbon black would be 1.0% by mass relative to the whole mass of the color curable composition, and the resulting product was uniformly mixed. Next, the resulting product was passed through a filter (product name: CCP-FX-C1B, obtained from ADVANTEC CO., LTD., having an average pore diameter of 3 µm), to obtain a "color curable composition C1".

### (Preparation Example 6: Preparation of curable composition D1 for support)

Acryloylmorpholine (product name: ACMO (registered trademark), obtained from KJ Chemicals Corporation) (30 parts by mass), 1,5-pentanediol (obtained from Tokyo Chemical Industry Co., Ltd.) (20 parts by mass), polypropylene glycol 2 (product name: ACTCOL (registered trademark) D-1000, obtained from Mitsui Fine Chemicals, Inc. Co., Ltd., having a number average molecular weight of 1,000), and bis(2,4,6-trimethylbenzoyl)-phenylphosphine oxide (product name: IRGACURE 819, obtained from BASF GmbH) (2 parts by mass) were added, and stirred and mixed, to obtain a "curable composition D1 for support".

### <Evaluation 1>

Cured products for test pieces were produced in the manner described below using the white curable compositions A1 to 5 obtained in Preparation Examples 3-1 to 3-5 and the transparent curable compositions B1 to 5 obtained in Preparation Examples 4-1 to 4-5, and "total light transmittance" through each test piece and "bending strength" of each test piece were evaluated. "Safety" of the white curable compositions A1 to 5 obtained in Preparation Examples 3-1 to 3-5 and the transparent curable compositions B1 to 5 obtained in Preparation Examples 4-1 to 4-5 was evaluated in the manner described below.

In the following description, the cured products of the white curable compositions A1 to 5 will be referred to as "cured products A", and the cured products of the transparent curable compositions B1 to 5 will be referred to as "cured products B".

### «Evaluation of total light transmittance»

### -Production of test piece-

As illustrated in FIG. 4, an OHP sheet 41a was placed on a glass substrate 40a, and a silicon mold 42 (shape: a length of 20 mm on each side, and an average thickness of 1 mm) was tightly attached on the OHP sheet 41a. Next, the silicon mold 42 was filled with a curable composition 43, which was the target of measurement, and covered with an OHP sheet 41b, which was then covered with a glass substrate 40b. Next, using an ultraviolet irradiator (device name: UNIJET E110Z HD_385 nm, having a wavelength of 385 nm, obtained from Ushio Inc.), the curable composition was irradiated with ultraviolet rays having an irradiation intensity of 200 mW/cm² for 5 minutes through the glass substrate 40b. Next, using the ultraviolet irradiator, the curable composition was irradiated with ultraviolet rays having an irradiation intensity of 500 mW/cm² for 5 minutes through the glass substrate 40a at the side opposite to the side irradiated with ultraviolet rays just before. Next, the OHP sheet 41b was peeled, and the cured product of the curable composition 43 was taken out from the silicon mold 42 and left in a stationary state in an environment at a temperature of 23°C at a relative humidity of 50% for 24 hours, to obtain a test piece having an average thickness of 1 mm.

### -Measurement of total light transmittance-

The total light transmittance (Tt (%)) through each test piece was measured by the method described below.

The total light transmittance (Tt) through each test piece in the direction of the thickness was measured using a haze meter (DIRECT READING HAZEMETER, obtained from Toyo Seiki Seisakusho, Ltd.) according to JIS K7361-1 / HAZE :JIS K7136. The results are presented in Table 1-1 and Table 1-2 below.

The lower limit of detection of the total light transmittance is 10%, and the upper limit of detection of the total light transmittance is 80%.

### «Evaluation of bending strength»

### -Production of test piece-

A test piece to be used to evaluate the bending strength was produced in the same manner as in the production of the test piece for evaluation of the total light transmittance, except that unlike in the production of the test piece for evaluation of the total light transmittance, the shape of the silicon mold was changed from the shape having a length of 20 mm on each side and an average thickness of 1 mm to a shape having a length of 40 mm, a width of 10 mm, and an average thickness of 1 mm.

### -Measurement of bending strength-

The bending strength (MPa) of each test piece was measured by the method described below.

A universal tester (AUTOGRAPH, model No. AG-I, obtained from Shimadzu Corporation), a load cell for 1 kN, and a three-point bending jig were used. Stress that would occur when the load point was displaced at a speed of 1 mm/minute while the distance between the fulcrums was set to 24 mm was plotted with respect to the amount of strain, and the stress at the breaking point was determined as the maximum stress (bending strength). The bending strength of the test piece was evaluated according to the evaluation criteria described below based on the value of the bending strength. The results are presented in Table 1-1 and Table 1-2 below.

### -Evaluation criteria-

A: The bending strength was higher than 120 MPa.
B: The bending strength was 100 MPa or higher and 120 MPa or lower.
C: The bending strength was lower than 100 MPa.

### «Evaluation of safety»

Safety was checked based on presence or absence of the carcinogenicity label in the Safety Data Sheets (SDS) of all materials used in the white curable compositions A1 to 5 obtained in Preparation Examples 3-1 to 3-5 and the transparent curable compositions B1 to 5 obtained in Preparation Examples 4-1 to 4-5, and was evaluated according to the evaluation criteria described below. The results are presented in Table 1-1 and Table 1-2 below.

Safety of each curable composition and safety of a cured product formed of the curable composition are substantially equal.

### -Evaluation criteria-

A: None of the materials had the carcinogenicity label (without carcinogenicity).
B: At least one of the materials used had the carcinogenicity label (with carcinogenicity).

The compositions of the white curable compositions A1 to 5 obtained in Preparation Examples 3-1 to 3-5 and the transparent curable compositions B1 to 5 obtained in Preparation Examples 4-1 to 4-5, and the evaluation results of "total light transmittance", "bending strength", and "safety" of each test piece are presented in Table 1-1 and Table 1-2 below.

**Table 1-1**

| | | | White curable composition A1 | White curable composition A2 | White curable composition A3 | White curable composition A4 | White curable composition A5 |
|---|---|---|---|---|---|---|---|
| Composition [volume ratio] | Monomer blend liquid | | 90 | 70 | 70 | 99 | 90 |
| | Hard solid component | ADMAFINE K180SM-C5 (volume mean particle diameter: 180 nm) | - | 30 | - | - | - |
| | | ADMAFINE SC2500-SMJ (volume mean particle diameter: 500 nm) | 10 | - | 30 | - | - |
| | | Titanium oxide mill base (volume mean particle diameter: 250 nm) | - | - | - | 1 | 10 |
| Cured product A evaluation results | Total light transmittance (%) | | 32 | 35 | 25 | 25 | < 10 |
| | Bending strength | | A | A | A | B | C |
| | Safety | | A | A | A | B | B |

**Table 1-2**

| | | | Transparent curable composition B1 | Transparent curable composition B2 | Transparent curable composition B3 | Transparent curable composition B4 | Transparent curable composition B5 |
|---|---|---|---|---|---|---|---|
| Composition [volume ratio] | Monomer blend liquid | | 100 | 70 | 90 | 90 | 40 |
| | Hard solid component | ADMANANO YA100C-SM2 (volume mean particle diameter: 100 nm) | - | 30 | - | - | 60 |
| | | ADMAFINE K180SM-C5 (volume mean particle diameter: 180 nm) | - | - | 10 | - | - |
| | | ADMANANO YA10C-SM1 (volume mean particle diameter: 10 nm) | - | - | - | 10 | - |
| Cured product B evaluation results | Total light transmittance (%) | | > 80 | 65 | 55 | > 80 | 60 |
| | Bending strength | | B | A | A | A | A |
| | Safety | | A | A | A | A | A |

### (Test Example 1)

### -Curable compositions-

Three of the tanks leading to the inkjet head (product name: MH2820, obtained from Ricoh Industry Company, Ltd.) of the three-dimensional object producing apparatus illustrated in FIG. 3 were filled with the white curable composition A1, the transparent curable composition B2, and the curable composition for support D1 that were obtained.

### -Settings-

Next, the shape of the model part to be produced was set to a length of 5 mm in the X direction, a length of 5 mm in the Y direction, and a height of 2 mm in the Z direction, and the colored region in the model part was set to the shape of a solid image positioned at a Z-direction height range of from 1 mm to 1.2 mm (thickness: 0.2 mm) and having a size of 5 mm × 5 mm in the XY plane. Moreover, support parts were set around the model part.

### -Discharging and smoothing of curable compositions-

Subsequently, the white curable composition A1, the transparent curable composition B2, and the curable composition for support D1 were discharged from the inkjet head under predetermined conditions (1/4 interlace, scanning speed: 150 mm/s, discharging frequency: 3,500 kHz, and 600 dpi × 600 dpi). Specifically, the white curable composition A1, the transparent curable composition B2, and the curable composition for support D1 were discharged in the same scan. Here, the white curable composition A1 and the transparent curable composition B2 were discharged in a manner that in the same layer, a deposited region B to be formed by the transparent curable composition B2 being discharged in the form of a liquid droplet and deposited would overlie a deposited region A to be formed by the white curable composition A1 being discharged in the form of a liquid droplet and deposited, to have an overlapping region. Here, the liquid droplet amount A of the white curable composition A1 discharged was 22.5 pL, and the liquid droplet amount B of the transparent curable composition B2 discharged was 22.5 pL.

After the discharging, the surface of the resulting product was smoothed with a roller.

### -Curing-

Next, using an ultraviolet irradiator (device name: SPOT CURE SP5-250DB, obtained from Ushio Inc.), the white curable composition A1, the transparent curable composition B2, and the curable composition for support D1 were cured by irradiation with a light quantity of 350 mJ/cm².

### -Layer lamination-

Subsequently, these steps were repeated, to form a plurality of layers.

### -Removal of support parts-

Next, the obtained object was immersed in water (1 L) at 40°C, and ultrasonically vibrated for 1 hour, to remove the support parts and keep the model part. Subsequently, the model part was taken out from the water, and dried at room temperature (25°C) for 24 hours, to obtain a three-dimensional object of Test Example 1 formed of the white curable composition A1 and the transparent curable composition B2.

### (Test Examples 2 to 9)

Three-dimensional objects of Test Examples 2 to 9 were obtained in the same manner as in Test Example 1, except that the combination of the white curable composition A1 and the transparent curable composition B2 specified under -Curable compositions- of Test Example 1 was changed as specified in Table 2-1 and Table 2-2 below.

### <Evaluation 2>

"Bending strength" and "safety" of the three-dimensional objects obtained in Test Examples 1 to 9 were evaluated in the same manners as the evaluation methods for "bending strength" and "safety" under <Evaluation 1> described above, except that the test pieces in the evaluation methods for "bending strength" and "safety" under <Evaluation 1> were changed to the three-dimensional objects obtained in Test Examples 1 to 9. Moreover, "gradation property" and "presence or absence of streak" of the three-dimensional objects obtained in Test Examples 1 to 9 were evaluated in the manners described below. The results are presented in Table 2-1 and Table 2-2 below.

### «Evaluation of gradation property»

The gradation property of the three-dimensional objects obtained in Test Examples 1 to 9 was evaluated in the manner described below.

The values of the "total light transmittance" through the cured product A and the cured product B presented in Table 2-1 and Table 2-2 below indicate the measurements in <Evaluation 1> described above. The "absolute value of the difference between the total light transmittance through the cured product A and the total light transmittance through the cured product B" was calculated for the respective combinations of the white curable composition and the transparent curable composition in Test Examples 1 to 9 based on the measurements of the total light transmittance through the cured product A and the cured product B obtained in <Evaluation 1>, and the gradation property was evaluated according to the evaluation criteria described below.

### -Evaluation criteria-

A: The absolute value of the difference between the total light transmittance through the cured product A and the total light transmittance through the cured product B was 30% or greater.
B: The absolute value of the difference between the total light transmittance through the cured product A and the total light transmittance through the cured product B was less than 30%.

### «Evaluation of presence or absence of streak»

As regards the three-dimensional objects obtained in Test Examples 1 to 9, an expert appraiser visually observed presence or absence of and the degree of a streak (a color boundary) in the three-dimensional objects, and gave ratings according to the evaluation criteria described below.

### -Evaluation criteria-

A: There was no streak (the boundary between white and transparent portions was not apparent).
B: There was a streak (the boundary between white and transparent portions was apparent).

**Table 2-1**

| | | | Test Ex. 1 | Test Ex. 2 | Test Ex. 3 | Test Ex. 4 | Test Ex. 5 |
|---|---|---|---|---|---|---|---|
| Object production conditions | Liquid droplet amount A (pL) | White curable composition A1 | 22.5 | 22.5 | - | - | - |
| | | White curable composition A2 | - | - | 22.5 | - | - |
| | | White curable composition A3 | - | - | - | 22.5 | - |
| | | White curable composition A4 | - | - | - | - | 22.5 |
| | | White curable composition A5 | - | | - | - | - |
| | Liquid droplet amount B (pL) | Transparent curable composition B1 | - | 22.5 | - | - | - |
| | | Transparent curable composition B2 | 22.5 | - | 22.5 | - | 22.5 |
| | | Transparent curable composition B3 | - | - | - | 22.5 | - |
| | | Transparent curable composition B4 | - | - | - | - | - |
| | | Transparent curable composition B5 | - | - | - | - | - |
| Total light transmittance through cured product | Total light transmittance (%) through cured product A | | 32 | 32 | 35 | 25 | 25 |
| | Total light transmittance (%) through cured product B | | 65 | > 80 | 65 | 55 | 65 |
| | Absolute value of total light transmittance difference between cured products A and B | | 33 | > 48 | 30 | 30 | 40 |
| Evaluation results | Gradation property | | A | A | A | A | A |
| | Presence or absence of streak | | A | A | A | A | A |
| | Bending strength | | A | B | A | A | A |
| | Safety | | A | A | A | A | B |

**Table 2-2**

| | | | Test Ex. 6 | Test Ex. 7 | Test Ex. 8 | Test Ex. 9 |
|---|---|---|---|---|---|---|
| Object production conditions | Liquid droplet amount A (pL) | White curable composition A1 | - | - | - | - |
| | | White curable composition A2 | - | - | 22.5 | 22.5 |
| | | White curable composition A3 | - | - | - | - |
| | | White curable composition A4 | 22.5 | - | - | - |
| | | White curable composition A5 | - | 22.5 | - | - |
| | Liquid droplet amount B (pL) | Transparent curable composition B1 | 22.5 | 22.5 | - | - |
| | | Transparent curable composition B2 | - | - | - | - |
| | | Transparent curable composition B3 | - | - | - | - |
| | | Transparent curable composition B4 | - | - | 22.5 | - |
| | | Transparent curable composition B5 | - | - | - | 22.5 |
| Total light transmittance through cured product | Total light transmittance (%) through cured product A | | 25 | < 10 | 35 | 35 |
| | Total light transmittance (%) through cured product B | | > 80 | > 80 | > 80 | 60 |
| | Absolute value of total light transmittance difference between cured products A and B | | > 55 | > 70 | > 45 | 25 |
| Evaluation results | Gradation property | | A | A | A | A |
| | Presence or absence of streak | | A | A | A | A |
| | Bending strength | | B | C | A | A |
| | Safety | | B | B | A | A |

### (Example 1)

### <Production of object including two-dimensional code>

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A1, the transparent curable composition B2, the color curable composition C1, and the curable composition for support D1 that were obtained.

### -Settings-

Next, the shape of the model part to be produced was set to a length of 10 mm in the X direction, a length of 10 mm in the Y direction, and a height of 2 mm in the Z direction, and the colored region in the model part was set to the shape of a two-dimensional code positioned at a Z-direction height range of from 1 mm to 1.2 mm (thickness: 0.2 mm) and formed of fine lines when seen in the XY plane. Moreover, support parts were set around the model part.

### -Discharging and smoothing of curable compositions-

Subsequently, the white curable composition A1, the transparent curable composition B2, the color curable composition C1, and the curable composition D1 for support were discharged from the inkjet head under predetermined conditions (1/4 interlace, scanning speed: 150 mm/s, discharging frequency: 3,500 kHz, and 600 dpi × 600 dpi). Specifically, in the production of a layer including a colored region, the color curable composition C1 and the curable composition D1 for support were discharged in the first scan, and the white curable composition A1 and the transparent curable composition B2 were discharged in the next scan. Here, the white curable composition A1 and the transparent curable composition B2 were discharged to form a base deposited region in a manner that in the same layer, the base deposited region to be formed of: a deposited region A to be formed by the white curable composition A1 being discharged in the form of a liquid droplet and deposited; and a deposited region B to be formed by the transparent curable composition B2 being discharged in the form of a liquid droplet and deposited would overlie a deposited region C to be formed by the white curable composition C1 being discharged in the form of a liquid droplet and deposited, to have an overlapping region above the deposited region C. The liquid droplet amount C of the color curable composition C1 discharged was 20 pL, the liquid droplet amount A of the white curable composition A1 discharged was 22.5 pL, and the liquid droplet amount B of the transparent curable composition B2 discharged was 22.5 pL. The shape of the deposited region C was approximately a circular shape having a diameter of 0.10 mm, and the shape of the base deposited region formed of the deposited region A formed by the white curable composition A1 being discharged in the form of a liquid droplet and deposited and the deposited region B formed by the transparent curable composition B2 being discharged in the form of a liquid droplet and deposited was approximately a circular shape having a diameter of 0.20 mm (i.e., the deposited region C was smaller than the base deposited region).

After the discharging, the surface of the resulting product was smoothed with a roller.

### -Curing-

Next, using an ultraviolet irradiator (device name: SPOT CURE SP5-250DB, obtained from Ushio Inc.), the white curable composition A1, the transparent curable composition B2, the color curable composition C1, and the curable composition D1 for support were cured by irradiation with a light quantity of 350 mJ/cm².

### -Layer lamination-

Subsequently, these steps were repeated, to form a plurality of layers.

### -Removal of support parts-

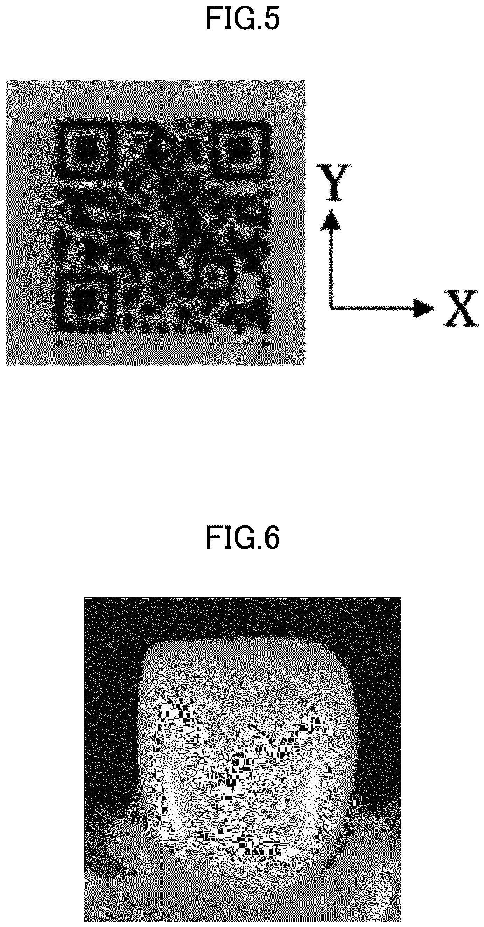

Next, the obtained object was immersed in water (1 L) at 40°C, and ultrasonically vibrated for 1 hour, to remove the support parts and keep the model part. Subsequently, the model part was taken out from the water, and dried at room temperature (25°C) for 24 hours, to obtain a three-dimensional object including a two-dimensional code (see FIG. 5). In FIG. 5, the double-headed arrow is a scale bar representing 6 mm.

### <Production of object including solid image>

A three-dimensional object including a solid image was obtained in the same manner as in the production of the object including a two-dimensional code, except that the contents specified under -Settings- in the production of the object including a two-dimensional code were changed as specified below.

### -Settings-

The shape of the model part to be produced was set to a length of 5 mm in the X direction, a length of 5 mm in the Y direction, and a height of 2 mm in the Z direction, and the colored region in the model part was set to the shape of a solid image positioned at a Z-direction height range of from 1 mm to 1.2 mm (thickness: 0.2 mm) and having a size of 5 mm × 5 mm in the XY plane. Moreover, support parts were set around the model part.

### (Example 2)

### <Production of object including two-dimensional code>

A three-dimensional object including a two-dimensional code was obtained in the same manner as in the production of the object including a two-dimensional code in Example 1, except that the contents specified under -Discharging and smoothing of curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Discharging and smoothing of curable compositions- in the production of the object including a solid image in Example 1 were changed as specified below.

### -Discharging and smoothing of curable compositions-

Discharging and smoothing of curable compositions were performed in the same manner as in -Discharging and smoothing of curable compositions- in Example 1, except that unlike in - Discharging and smoothing of curable compositions- in Example 1, the white curable composition A1 and the transparent curable composition B2 were discharged in a manner that in the same layer, a base deposited region to be formed of: a deposited region A to be formed by the white curable composition A1 being discharged in the form of a liquid droplet and deposited; and a deposited region B to be formed by the transparent curable composition B2 being discharged in the form of a liquid droplet and deposited would not overlie and overlap a deposited region C to be formed by the white curable composition C1 being discharged in the form of a liquid droplet and deposited.

### (Example 3)

### <Production of object including two-dimensional code>

A three-dimensional object including a two-dimensional code was obtained in the same manner as in the production of the object including a two-dimensional code in Example 1, except that the contents specified under -Discharging and smoothing of curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Discharging and smoothing of curable compositions- in the production of the object including a solid image in Example 1 were changed as specified below.

### -Discharging and smoothing of curable compositions-

Discharging and smoothing of curable compositions were performed in the same manner as in -Discharging and smoothing of curable compositions- in Example 1, except that unlike in - Discharging and smoothing of curable compositions- in Example 1, the liquid droplet amount C of the color curable composition C1 discharged was changed to 30 pL.

Here, the shape of the deposited region C was approximately a circular shape having a diameter of 0.13 mm, and the shape of the base deposited region formed of the deposited region A formed by the white curable composition A1 being discharged in the form of a liquid droplet and deposited and the deposited region B formed by the transparent curable composition B2 being discharged in the form of a liquid droplet and deposited was approximately a circular shape having a diameter of 0.20 mm (i.e., the deposited region C was smaller than the base deposited region).

### (Example 4)

### <Production of object including two-dimensional code>

A three-dimensional object including a two-dimensional code was obtained in the same manner as in the production of the object including a two-dimensional code in Example 1, except that the contents specified under -Curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Curable compositions- in the production of the object including a solid image in Example 1 were changed as specified below.

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A1, the transparent curable composition B1, the color curable composition C1, and the curable composition D1 for support that were obtained.

### (Example 5)

### <Production of object including two-dimensional code>

A three-dimensional object including a two-dimensional code was obtained in the same manner as in the production of the object including a two-dimensional code in Example 1, except that the contents specified under -Curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Curable compositions- in the production of the object including a solid image in Example 1 were changed as specified below.

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A2, the transparent curable composition B1, the color curable composition C1, and the curable composition D1 for support that were obtained.

### (Example 6)

### <Production of object including two-dimensional code>

A three-dimensional object including a two-dimensional code was obtained in the same manner as in the production of the object including a two-dimensional code in Example 1, except that the contents specified under -Curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Curable compositions- in the production of the object including a solid image in Example 1 were changed as specified below.

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A3, the transparent curable composition B3, the color curable composition C1, and the curable composition D1 for support that were obtained.

### (Example 7)

### <Production of object including two-dimensional code>

A three-dimensional object including a two-dimensional code was obtained in the same manner as in the production of the object including a two-dimensional code in Example 1, except that the contents specified under -Curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Curable compositions- in the production of the object including a solid image in Example 1 were changed as specified below.

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A4, the transparent curable composition B2, the color curable composition C1, and the curable composition D1 for support that were obtained.

### (Example 8)

### <Production of object including two-dimensional code>

A three-dimensional object including a two-dimensional code was obtained in the same manner as in the production of the object including a two-dimensional code in Example 1, except that the contents specified under -Curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Curable compositions- in the production of the object including a solid image in Example 1 were changed as specified below.

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A4, the transparent curable composition B1, the color curable composition C1, and the curable composition D1 for support that were obtained.

### (Example 9)

### <Production of object including two-dimensional code>

A three-dimensional object including a two-dimensional code was obtained in the same manner as in the production of the object including a two-dimensional code in Example 1, except that the contents specified under -Curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Curable compositions- in the production of the object including a solid image in Example 1 were changed as specified below.

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A5, the transparent curable composition B1, the color curable composition C1, and the curable composition D1 for support that were obtained.

### (Example 10)

### <Production of object including two-dimensional code>

A three-dimensional object including a two-dimensional code was obtained in the same manner as in the production of the object including a two-dimensional code in Example 9, except that the contents specified under -Discharging and smoothing of curable compositions- in the production of the object including a two-dimensional code in Example 9 were changed as specified below.

### <Production of object including solid image>

A three-dimensional object including a solid image was obtained in the same manner as in the production of the object including a solid image in Example 9, except that the contents specified under -Discharging and smoothing of curable compositions- in the production of the object including a solid image in Example 9 were changed as specified below.

### -Discharging and smoothing of curable compositions-

Discharging and smoothing of curable compositions were performed in the same manner as in -Discharging and smoothing of curable compositions- in Example 9, except that unlike in - Discharging and smoothing of curable compositions- in Example 9, the white curable composition A5 and the transparent curable composition B1 were discharged in a manner that in the same layer, a deposited region A to be formed by the white curable composition A5 being discharged in the form of a liquid droplet and deposited and a deposited region B to be formed by the transparent curable composition B1 being discharged in the form of a liquid droplet and deposited would not overlie and overlap a deposited region C to be formed by the color curable composition C1 being discharged in the form of a liquid droplet and deposited.

### (Example 11)

### <Production of object including two-dimensional code>

A three-dimensional object including a two-dimensional code was obtained in the same manner as in the production of the object including a two-dimensional code in Example 9, except that the contents specified under -Discharging and smoothing of curable compositions- in the production of the object including a two-dimensional code in Example 9 were changed as specified below.

### <Production of object including solid image>

A three-dimensional object including a solid image was obtained in the same manner as in the production of the object including a solid image in Example 9, except that the contents specified under -Discharging and smoothing of curable compositions- in the production of the object including a solid image in Example 9 were changed as specified below.

### -Discharging and smoothing of curable compositions-

Discharging and smoothing of curable compositions were performed in the same manner as in -Discharging and smoothing of curable compositions- in Example 9, except that unlike in - Discharging and smoothing of curable compositions- in Example 9, the liquid droplet amount C of the color curable composition C1 discharged was changed to 30 pL.

Here, the shape of the deposited region C was approximately a circular shape having a diameter of 0.13 mm, and the shape of the base deposited region formed of the deposited region A formed by the white curable composition A5 being discharged in the form of a liquid droplet and deposited and the deposited region B formed by the transparent curable composition B1 being discharged in the form of a liquid droplet and deposited was approximately a circular shape having a diameter of 0.20 mm (i.e., the deposited region C was smaller than the base deposited region).

### (Example 12)

### <Production of object including two-dimensional code>

A three-dimensional object including a two-dimensional code was obtained in the same manner as in the production of the object including a two-dimensional code in Example 1, except that the contents specified under -Curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Curable compositions- in the production of the object including a solid image in Example 1 were changed as specified below.

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A2, the transparent curable composition B4, the color curable composition C1, and the curable composition D1 for support that were obtained.

### (Example 13)

### <Production of object including two-dimensional code>

A three-dimensional object including a two-dimensional code was obtained in the same manner as in the production of the object including a two-dimensional code in Example 1, except that the contents specified under -Curable compositions- in the production of the object including a two-dimensional code in Example 1 were changed as specified below.

### <Production of object including solid image>

A three-dimensional object including a solid image was obtained in the same manner as in the production of the object including a solid image in Example 1, except that the contents specified under -Curable compositions- in the production of the object including a solid image in Example 1 were changed as specified below.

### -Curable compositions-

Four tanks leading to the inkjet head (product name: MH2820, obtained from Ricoh Industry Company, Ltd.) of the three-dimensional object producing apparatus illustrated in FIG. 3 were filled respectively with the white curable composition A2, the transparent curable composition B5, the color curable composition C1, and the curable composition D1 for support that were obtained.

### <Evaluation 3>

"Gradation property", "safety", "object production accuracy", and "bending strength" of the three-dimensional objects including a two-dimensional code and the three-dimensional objects including a solid image obtained in Examples 1 to 13, and "colored region printing accuracy" of the three-dimensional objects including a two-dimensional code obtained in Examples 1 to 13 were evaluated in the manners described below. The results are presented in Table 3-1 and Table 3-2 below.

The values of the "total light transmittance" through the cured product A and the cured product B presented in Table 3-1 and Table 3-2 below indicate the measurements obtained in <Evaluation 1> described above. The "absolute value of the difference between the total light transmittance through the cured product A and the total light transmittance through the cured product B" was calculated for the respective combinations of the white curable composition A and the transparent curable composition B in Examples 1 to 13 based on the measurements of the total light transmittance through the cured product A and the cured product B obtained in <Evaluation 1>. The calculation results are presented in Table 3-1 and Table 3-2 below.

### «Evaluation of gradation property»

The "gradation property" of the three-dimensional objects including a two-dimensional code or the three-dimensional objects including a solid image obtained in Examples 1 to 13 was evaluated in the same manner and according to the same evaluation criteria as in the method for evaluating the "gradation property" in <Evaluation 2> described above, except that unlike in the method for evaluating the "gradation property" in <Evaluation 2>, the three-dimensional objects obtained in Test Examples 1 to 9 were changed to the three-dimensional objects including a two-dimensional code or the three-dimensional objects including a solid image obtained in Examples 1 to 13.

### «Evaluation of safety»

Safety was checked based on presence or absence of the carcinogenicity label in the Safety Data Sheets (SDS) of all materials used in the white curable compositions A1 to 5, the transparent curable compositions B1 to 5, and the color curable composition C1 used in Examples 1 to 13, and was evaluated according to the evaluation criteria described below.

Safety of each curable composition and safety of a cured product formed of the curable composition are substantially equal.

### -Evaluation criteria-

A: None of the materials had the carcinogenicity label (without carcinogenicity).
B: At least any of the materials used had the carcinogenicity label (with carcinogenicity).

### <<Evaluation of colored region printing accuracy of three-dimensional object>>

An expert appraiser visually observed presence or absence of and the degree of bleeding in the colored region of the three-dimensional objects including a two-dimensional code obtained in Examples 1 to 13 and also tested whether the two-dimensional code could be read by a two-dimensional code reading device, and gave ratings according to the evaluation criteria described below.

### -Evaluation criteria-

A: There was no bleeding, and the two-dimensional code could be read by the two-dimensional code reading device.
B: There was a slight bleeding, and the two-dimensional code could not be read by the two-dimensional code reading device.
C: There was a severe bleeding, and the two-dimensional code could not be read by the two-dimensional code reading device.

### <<Evaluation of object production accuracy of three-dimensional object>>

An expert appraiser visually observed the three-dimensional objects including a two-dimensional code or the three-dimensional objects including a solid image obtained in Examples 1 to 13, and gave ratings according to the evaluation criteria described below.

### -Evaluation criteria-

A: No deformation such as a dent in the top surface of the three-dimensional object was observed.
B: A dent in the top surface of the three-dimensional object was observed at a location above the colored region.

### <<Evaluation of bending strength of three-dimensional object>>

The "bending strength" of the three-dimensional objects including a two-dimensional code or the three-dimensional objects including a solid image obtained in Examples 1 to 13 was evaluated in the same manner and according to the same evaluation criteria as in the method for evaluating the "bending strength" in <Evaluation 1> described above, except that unlike in the method for evaluating the "bending strength" in <Evaluation 1>, the test pieces were changed to the three-dimensional objects including a two-dimensional code or the three-dimensional objects including a solid image obtained in Examples 1 to 13.

**Table 3-1**

| | | | Ex. 1 | Ex. 2 | Ex. 3 | Ex. 4 | Ex. 5 | Ex. 6 |
|---|---|---|---|---|---|---|---|---|
| Object production conditions | Liquid droplet amount A (pL) | White curable composition A1 | 22.5 | 22.5 | 22.5 | 22.5 | - | - |
| | | White curable composition A2 | - | - | - | - | 22.5 | - |
| | | White curable composition A3 | - | - | - | - | - | 22.5 |
| | | White curable composition A4 | - | - | - | - | - | - |
| | | White curable composition A5 | - | - | - | - | - | - |
| | Liquid droplet amount B (pL) | Transparent curable composition B1 | - | - | - | 22.5 | - | - |
| | | Transparent curable composition B2 | 22.5 | 22.5 | 22.5 | - | 22.5 | - |
| | | Transparent curable composition B3 | - | - | - | - | - | 22.5 |
| | | Transparent curable composition B4 | - | - | - | | - | - |
| | | Transparent curable composition B5 | - | - | - | - | - | - |
| | Base deposited region (mm) | | 0.20 | 0.20 | 0.20 | 0.20 | 0.20 | 0.20 |
| | Liquid droplet amount C (pL) | Color curable composition C1 | 20 | 20 | 30 | 20 | 20 | 20 |
| | Deposited region C (mm) | | 0.10 | 0.10 | 0.13 | 0.10 | 0.10 | 0.10 |
| | Positions of deposited region C and deposited regions A and B | | Overlap | Not overlap | Overlap | Overlap | Overlap | Overlap |
| Total light transmittance through cured product | Total light transmittance (%) thro. cured product A | | 32 | 32 | 32 | 32 | 35 | 25 |
| | Total light transmittance (%) thro. cured product B | | 65 | 65 | 65 | > 80 | 65 | 55 |
| | Absolute value of total light transmittance difference between cured products A and B | | 33 | 33 | 33 | > 48 | 30 | 30 |
| Evaluation results | Gradation property | | A | A | A | A | A | A |
| | Presence or absence of streak | | A | A | A | A | A | A |
| | Safety | | A | A | A | A | A | A |
| | 2D code | Colored region printing accuracy | A | A | B | A | A | A |
| | | Object production accuracy | A | A | A | A | A | A |
| | | Bending strength | A | A | A | B | A | A |
| | Solid image | Object production accuracy | A | B | A | A | A | A |
| | | Bending strength | A | A | A | B | A | A |

**Table 3-2**

| | | | Ex. 7 | Ex. 8 | Ex. 9 | Ex. 10 | Ex. 11 | Ex. 12 | Ex. 13 |
|---|---|---|---|---|---|---|---|---|---|
| Object production conditions | Liquid droplet amount A (pL) | White curable composition A1 | | - | - | - | - | | |
| | | White curable composition A2 | - | - | - | - | - | 22.5 | 22.5 |
| | | White curable composition A3 | - | - | - | | | | |
| | | White curable composition A4 | 22.5 | 22.5 | - | - | - | - | - |
| | | White curable composition A5 | - | - | 22.5 | 22.5 | 22.5 | - | - |
| | Liquid droplet amount B (pL) | Transparent curable composition B1 | - | 22.5 | 22.5 | 22.5 | 22.5 | - | - |
| | | Transparent curable composition B2 | 22.5 | - | - | - | - | - | - |
| | | Transparent curable composition B3 | - | - | - | - | - | - | - |
| | | Transparent curable composition B4 | - | - | - | - | - | 22.5 | - |
| | | Transparent curable composition B5 | - | - | - | - | - | - | 22.5 |
| | Base deposited region (mm) | | 0.20 | 0.20 | 0.20 | 0.20 | 0.20 | 0.2 | 0.2 |
| | Liquid droplet amount C (pL) | Color curable composition C1 | 20 | 20 | 20 | 20 | 30 | 20 | 20 |
| | Deposited region C (mm) | | 0.10 | 0.10 | 0.10 | 0.10 | 0.13 | 0.1 | 0.1 |
| | Positions of deposited region C and deposited regions A and B | | Overlap | Overlap | Overlap | Not overlap | Overlap | Overlap | Overlap |
| Total light transmittance through cured product | Total light transmittance (%) thro. cured product A | | 25 | 25 | < 10 | < 10 | < 10 | 35 | 35 |
| | Total light transmittance (%) thro. cured product B | | 65 | > 80 | >80 | > 80 | > 80 | > 80 | 60 |
| | Absolute value of total light transmittance difference between cured products A and B | | 40 | > 55 | > 70 | > 70 | > 70 | > 45 | 25 |
| Evaluation results | Gradation property | | A | A | A | A | A | A | B |
| | Presence or absence of streak | | A | A | A | A | A | A | A |
| | Safety | | B | B | B | B | B | A | A |
| | 2D code | Colored region printing accuracy | A | A | A | A | B | A | A |
| | | Object production accuracy | A | A | A | A | A | A | A |
| | | Bending strength | A | B | C | C | C | A | A |
| | Solid image | Object production accuracy | A | A | A | B | B | A | A |
| | | Bending strength | A | B | C | C | C | A | A |

### (Example 14)

### <Production of artificial tooth object>

A three-dimensional object to serve as an artificial tooth was obtained in the same manner as in Example 1, except that unlike in Example 1, the color curable composition C1 was changed to a color curable composition C2 prepared by the method described below, and the settings were changed as specified below.

### <<Preparation of color curable composition C2>>

### -Preparation of white curable composition a-

Tricyclodecane dimethylol diacrylate ("KAYARADR-684", obtained from Nippon Kayaku Co., Ltd.) (5 parts by mass), isodecyl acrylate ("SR395N5", obtained from Sartomer USA, LLC) (20 parts by mass), tetrahydrofurfuryl acrylate ("SR285", obtained from Sartomer USA, LLC) (44.9 parts by mass), a white pigment (pigment: TiO₂, dispersant: SOLSPERSE 32000) (30 parts by mass), and phenyl bis(2,4,6-trimethylbenzoyl)phosphine oxide ("IRGACURE 819", obtained from BASF Japan Ltd.) (0.1 parts by mass) were mixed, to prepare a white curable composition a.

### -Preparation of transparent curable composition b-

Tricyclodecane dimethylol diacrylate ("KAYARADR-684", obtained from Nippon Kayaku Co., Ltd.) (38 parts by mass), acryloylmorpholine ("ACMO", obtained from KJ Chemicals Corporation) (7 parts by mass), dicyclopentanyloxyethyl acrylate ("FA-512", obtained from Hitachi Kasei Co., Ltd.) (34.7 parts by mass), tetrahydrofurfuryl acrylate ("SR285", obtained from Sartomer USA, LLC) (10 parts by mass), trimethylolpropane triacrylate ("SR3515", obtained from Sartomer USA, LLC) (10 parts by mass), polyether-modified silicone-based surfactant ("KF-945", obtained from Shin-Etsu Chemical Co., Ltd.) (0.2 parts by mass), and phenyl bis(2,4,6-trimethylbenzoyl)phosphine oxide ("IRGACURE 819", obtained from BASF Japan Ltd.) (0.1 parts by mass) were mixed, to prepare a transparent curable composition b.

### -Preparation of magenta curable composition-

N-vinyl caprolactam ("VCAP", obtained from ISP Corporation) (5 parts by mass), isobornyl acrylate ("IBXA", obtained from Osaka Organic Chemical Industry Ltd.) (30 parts by mass), tetrahydrofurfuryl acrylate ("SR285", obtained from Sartomer USA, LLC) (34.9 parts by mass), a magenta pigment (pigment: PR122, dispersant: BYK9151) (30 parts by mass), and phenyl bis(2,4,6-trimethylbenzoyl)phosphine oxide ("IRGACURE 819", obtained from BASF Japan Ltd.) (0.1 parts by mass) were mixed, to prepare a magenta curable composition.

### -Preparation of cyan curable composition-

Polyethylene glycol (600) diacrylate ("SR610NS", obtained from Sartomer USA, LLC) (5 parts by mass), isobornyl acrylate ("IBXA", obtained from Osaka Organic Chemical Industry Ltd.) (40 parts by mass), tetrahydrofurfuryl acrylate ("SR285", obtained from Sartomer USA, LLC) (44.9 parts by mass), a cyan pigment (pigment: PB15:4, dispersant: SOLSPERSE 32000) (30 parts by mass), and phenyl bis(2,4,6-trimethylbenzoyl)phosphine oxide ("IRGACURE 819", obtained from BASF Japan Ltd.) (0.1 parts by mass) were mixed, to prepare a cyan curable composition.

### -Preparation of yellow curable composition-

Isobornyl acrylate ("IBXA", obtained from Osaka Organic Chemical Industry Ltd.) (10 parts by mass), tetrahydrofurfuryl acrylate ("SR285", obtained from Sartomer USA, LLC) (59.9 parts by mass), a yellow pigment (pigment: PY150, dispersant: BYK9151) (30 parts by mass), and phenyl bis(2,4,6-trimethylbenzoyl)phosphine oxide ("IRGACURE 819", obtained from BASF Japan Ltd.) (0.1 parts by mass) were mixed, to prepare a yellow curable composition.

### -Preparation of color curable composition C2-

The white curable composition a and the transparent curable composition b were mixed in a manner that the total light transmittance through a cured product would be 35%.

The obtained mixture was further mixed with the magenta curable composition, the cyan curable composition, and the yellow curable composition in a manner that a cured product would have a L* value of 72.3, an a* value of 8.2, and a b* value of 29.0 in the L*a*b* display system, to prepare a color curable composition C2.

### <<Settings>>

The shape of a tooth object, which was the target of production, was set to be the same as the shape of three-dimensional data obtained by 3D scanning of an actual tooth, and support parts were set around the model part.

The object (artificial tooth) obtained in Example 14 is illustrated in FIG. 6. In FIG. 6, the base part corresponding to the gingiva (gum) was not a product obtained by the object production described above, and the object was only the part corresponding to the tooth.

Further, the present invention is not limited to these embodiments, but various variations and modifications may be made without departing from the scope of the present invention as set out in the claims.

## Claims

1. A three-dimensional object producing method for producing a three-dimensional object using a set of base curable compositions including a curable composition A and a curable composition B, and using a curable composition C, the three-dimensional object producing method comprising:
discharging either or both of the curable composition A and the curable composition B by an inkjet method and curing either or both of the curable composition A and the curable composition B, to produce a base cured product; and
discharging the curable composition C containing a coloring material by an inkjet method and curing the curable composition C, to produce a cured product C,
wherein an absolute value of a difference between total light transmittance through a cured product A of the curable composition A and total light transmittance through a cured product B of the curable composition B is 10% or greater,
**characterized in that** a deposited region C (D1) formed by deposition of a liquid droplet (d1) amount of the curable composition C discharged is smaller than a base deposited region (D2) formed by deposition of a liquid droplet (d2) amount of the curable composition A and the curable composition B discharged.

2. The three-dimensional object producing method according to claim 1,
wherein a difference between total light transmittance through a portion, of the three-dimensional object, through which the total light transmittance is highest and total light transmittance through a portion, of the three-dimensional object, through which the total light transmittance is lowest is 10% or greater.

3. The three-dimensional object producing method according to claim 2,
wherein a difference between total light transmittance through a portion, of the three-dimensional object, through which the total light transmittance is highest and total light transmittance through a portion, of the three-dimensional object, through which the total light transmittance is lowest is 30% or greater.

4. The three-dimensional object producing method according to claim 3,
wherein the total light transmittance through the cured product A is 35% or lower, and the total light transmittance through the cured product B is 60% or higher.

5. The three-dimensional object producing method according to any one of claims 1 to 4,
wherein discharging of the curable composition A and discharging of the curable composition B are performed in a same scan.

6. The three-dimensional object producing method according to any one of claims 1 to 5,
wherein the curable composition A contains a solid component having an elastic modulus of 4 GPa or higher and a volume mean particle diameter of 10 nm or greater and 1,000 nm or less, and
the curable composition B contains a solid component having an elastic modulus of 4 GPa or higher and a volume average particle diameter of 10 nm or greater and 1,000 nm or less.

7. The three-dimensional object producing method according to claim 6,
wherein the curable composition A contains a solid component having an elastic modulus of 4 GPa or higher and a volume average particle diameter of greater than 100 nm and 1,000 nm or less, a content of the solid component in the curable composition A being 10% by volume or greater, and
the curable composition B contains a solid component having an elastic modulus of 4 GPa or higher and a volume average particle diameter of greater than 100 nm and 1,000 nm or less, a content of the solid component in the curable composition B being 10% by volume or less, or contains a solid component having an elastic modulus of 4 GPa or higher and a volume average particle diameter of 10 nm or greater and 100 nm or less, a content of the solid component in the curable composition B being 60% by volume or less.

8. The three-dimensional object producing method according to any one of claims 1 to 7,
wherein the deposited region C (D1) formed by the curable composition C being discharged by the inkjet method in a form of a liquid droplet (d1) and deposited and the base deposited region (D2) formed by the curable composition A and the curable composition B being discharged by the inkjet method in a form of a liquid droplet (d2) and deposited have an overlapping region.

9. The three-dimensional object producing method according to any one of claims 1 to 8,
wherein the base deposited region (D2) formed by the curable composition A and the curable composition B being discharged by the inkjet method in a form of a liquid droplet (d2) and deposited overlies the deposited region C (D1) formed by the curable composition C being discharged by the inkjet method in a form of a liquid droplet (d1) and deposited, to have an overlapping region above the deposited region C (D1).

10. The three-dimensional object producing method according to any one of claims 1 to 9,
wherein an amount of a liquid droplet of the curable composition C discharged by the inkjet method in a form of a liquid droplet (d1) is lower than a total of an amount of a liquid droplet of the curable composition A discharged by the inkjet method in a form of a liquid droplet (d2) and an amount of a liquid droplet of the curable composition B discharged by the inkjet method in a form of a liquid droplet (d2).

11. The three-dimensional object producing method according to claim 10,
wherein the amount of the liquid droplet of the curable composition C discharged by the inkjet method in a form of a liquid droplet (d1) is 70% by volume or less relative to the total of the amount of the liquid droplet of the curable composition A discharged by the inkjet method in a form of a liquid droplet (d2) and the amount of the liquid droplet of the curable composition B discharged by the inkjet method in a form of a liquid droplet (d2) .

12. The three-dimensional object producing method according to claim 11,
wherein the amount of the liquid droplet of the curable composition C discharged by the inkjet method in a form of a liquid droplet (d1) is 50% by volume or less relative to the total of the amount of the liquid droplet of the curable composition A discharged by the inkjet method in a form of a liquid droplet (d2) and the amount of the liquid droplet of the curable composition B discharged by the inkjet method in a form of a liquid droplet (d2) .

13. The three-dimensional object producing method according to any one of claims 1 to 12,
wherein the curable composition C contains a pigment having a volume average particle diameter of 10 nm or greater and 1,000 nm or less, and
a content of the pigment is 0.1% by mass or greater relative to a whole mass of the curable composition C.

14. The three-dimensional object producing method according to any one of claims 1 to 13,
wherein the curable composition C is substantially free of a solid component having an elastic modulus of 4 GPa or higher.

15. The three-dimensional object producing method according to any one of claims 1 to 14,
wherein the coloring material in the curable composition C contains a pigment, and
the curable composition A and the curable composition B are substantially free of a pigment.

16. The three-dimensional object producing method according to any one of claims 1 to 15, further comprising
discharging a curable composition D for support, which is for supporting the three-dimensional object, by an inkjet method and curing the curable composition D for support, to produce a cured product D for support.

17. The three-dimensional object producing method according to any one of claims 1 to 16, wherein the three-dimensional object is an artificial tooth object.

18. A three-dimensional object producing apparatus (30); configured to produce a three-dimensional object (10) using a set of base curable compositions including a curable composition A and a curable composition B, and using a curable composition C, the three-dimensional object producing apparatus comprising a base cured product producing unit (31), a cured product C producing unit (31), and a control unit, wherein the control unit is configured to:
control a base cured product producing unit to discharge either or both of the curable composition A and the curable composition B by an inkjet method and cure either or both of the curable composition A and the curable composition B, to produce a base cured product; and
control a cured product C producing unit to discharge the curable composition C containing a coloring material by an inkjet method and cure the curable composition C, to produce a cured product C,
wherein an absolute value of a difference between total light transmittance through a cured product A of the curable composition A and total light transmittance through a cured product B of the curable composition B is 10% or greater,
**characterized in that** the control unit is further configured to control the base cured product producing unit and the cured product C producing unit such that a deposited region C (D1) formed by deposition of a liquid droplet (d1) amount of the curable composition C discharged is smaller than a base deposited region (D2) formed by deposition of a liquid droplet (d2) amount of the curable composition A and the curable composition B discharged.

## Patentansprüche

1. Herstellungsverfahren für ein dreidimensionales Objekt zur Herstellung eines dreidimensionalen Objekts unter Verwendung eines Satzes von basishärtbaren Zusammensetzungen, die eine härtbare Zusammensetzung A und eine härtbare Zusammensetzung B einschließen, und unter Verwendung einer härtbaren Zusammensetzung C, wobei das Herstellungsverfahren für ein dreidimensionales Objekt Folgendes umfasst:
Abgeben einer oder beider der härtbaren Zusammensetzung A und der härtbaren Zusammensetzung B durch ein Tintenstrahlverfahren und Härten einer oder beider der härtbaren Zusammensetzung A und der härtbaren Zusammensetzung B, um ein basisgehärtetes Produkt herzustellen; und
Abgeben der härtbaren Zusammensetzung C, die ein Färbematerial enthält, durch ein Tintenstrahlverfahren und Härten der härtbaren Zusammensetzung C, um ein gehärtetes Produkt C herzustellen,
wobei ein absoluter Wert einer Differenz zwischen einer Gesamtlichtdurchlässigkeit durch ein gehärtetes Produkt A der härtbaren Zusammensetzung A und einer Gesamtlichtdurchlässigkeit durch ein gehärtetes Produkt B der härtbaren Zusammensetzung B 10 % oder mehr beträgt,
**dadurch gekennzeichnet, dass** ein abgelagerter Bereich C (D1), der durch Ablagerung einer Menge von Flüssigkeitströpfchen (d1) der abgegebenen härtbaren Zusammensetzung C gebildet ist, kleiner ist als ein basisabgelagerter Bereich (D2), der durch Ablagerung einer Menge von Flüssigkeitströpfchen (d2) der abgegebenen härtbaren Zusammensetzung A und der abgegebenen härtbaren Zusammensetzung B gebildet ist.

2. Herstellungsverfahren für ein dreidimensionales Objekt nach Anspruch 1,
wobei eine Differenz zwischen einer Gesamtlichtdurchlässigkeit durch einen Abschnitt, von dem dreidimensionalen Objekt, durch den die Gesamtlichtdurchlässigkeit am höchsten ist, und einer Gesamtlichtdurchlässigkeit durch einen Abschnitt, von dem dreidimensionalen Objekt, durch den die Gesamtlichtdurchlässigkeit am niedrigsten ist, 10 % oder mehr beträgt.

3. Herstellungsverfahren für ein dreidimensionales Objekt nach Anspruch 2,
wobei eine Differenz zwischen einer Gesamtlichtdurchlässigkeit durch einen Abschnitt, von dem dreidimensionalen Objekt, durch den die Gesamtlichtdurchlässigkeit am höchsten ist, und einer Gesamtlichtdurchlässigkeit durch einen Abschnitt, von dem dreidimensionalen Objekt, durch den die Gesamtlichtdurchlässigkeit am niedrigsten ist, 30 % oder mehr beträgt.

4. Herstellungsverfahren für ein dreidimensionales Objekt nach Anspruch 3,
wobei die Gesamtlichtdurchlässigkeit durch das gehärtete Produkt A 35 % oder weniger beträgt und die Gesamtlichtdurchlässigkeit durch das gehärtete Produkt B 60 % oder mehr beträgt.

5. Herstellungsverfahren für ein dreidimensionales Objekt nach einem der Ansprüche 1 bis 4,
wobei das Abgeben der härtbaren Zusammensetzung A und das Abgeben der härtbaren Zusammensetzung B in einem gleichen Scan durchgeführt werden.

6. Herstellungsverfahren für ein dreidimensionales Objekt nach einem der Ansprüche 1 bis 5,
wobei die härtbare Zusammensetzung A eine feste Komponente mit einem Elastizitätsmodul von 4 GPa oder mehr und einem volumengemittelten Partikeldurchmesser von 10 nm oder mehr und 1 000 nm oder weniger enthält, und
die härtbare Zusammensetzung B eine feste Komponente mit einem Elastizitätsmodul von 4 GPa oder mehr und einem volumengemittelten Partikeldurchmesser von 10 nm oder mehr und 1 000 nm oder weniger enthält.

7. Herstellungsverfahren für ein dreidimensionales Objekt nach Anspruch 6,
wobei die härtbare Zusammensetzung A eine feste Komponente mit einem Elastizitätsmodul von 4 GPa oder höher und einem volumengemittelten Partikeldurchmesser von mehr als 100 nm und 1 000 nm oder weniger enthält, wobei ein Gehalt der festen Komponente in der härtbaren Zusammensetzung A 10 Volumen-% oder mehr beträgt, und
die härtbare Zusammensetzung B eine feste Komponente mit einem Elastizitätsmodul von 4 GPa oder höher und einem volumengemittelten Partikeldurchmesser von mehr als 100 nm und 1 000 nm oder weniger enthält, wobei ein Gehalt der festen Komponente in der härtbaren Zusammensetzung B 10 Volumen-% oder weniger beträgt, oder eine feste Komponente mit einem Elastizitätsmodul von 4 GPa oder höher und einem volumengemittelten Partikeldurchmesser von 10 nm oder höher und 100 nm oder weniger enthält, wobei ein Gehalt der festen Komponente in der härtbaren Zusammensetzung B 60 Volumen-% oder weniger beträgt.

8. Herstellungsverfahren für ein dreidimensionales Objekt nach einem der Ansprüche 1 bis 7,
wobei der abgelagerte Bereich C (D1), der dadurch gebildet wird, dass die härtbare Zusammensetzung C durch das Tintenstrahlverfahren in einer Form eines Flüssigkeitströpfchens (d1) abgegeben und abgelagert wird, und der basisabgelagerte Bereich (D2), der dadurch gebildet wird, dass die härtbare Zusammensetzung A und die härtbare Zusammensetzung B durch das Tintenstrahlverfahren in einer Form eines Flüssigkeitströpfchens (d2) abgegeben und abgelagert werden, einen überlappenden Bereich aufweisen.

9. Herstellungsverfahren für ein dreidimensionales Objekt nach einem der Ansprüche 1 bis 8,
wobei der basisabgelagerte Bereich (D2), der dadurch gebildet wird, dass die härtbare Zusammensetzung A und die härtbare Zusammensetzung B durch das Tintenstrahlverfahren in einer Form eines Flüssigkeitströpfchens (d2) abgegeben und abgelagert werden, den abgelagerten Bereich C (D1), der dadurch gebildet wird, dass die härtbare Zusammensetzung C durch das Tintenstrahlverfahren in einer Form eines Flüssigkeitströpfchens (d1) abgegeben und abgelagert wird, überlagert, um einen überlappenden Bereich über dem abgelagerten Bereich C (D1) aufzuweisen.

10. Herstellungsverfahren für ein dreidimensionales Objekt nach einem der Ansprüche 1 bis 9,
wobei eine Menge eines Flüssigkeitströpfchens der härtbaren Zusammensetzung C, die durch das Tintenstrahlverfahren in einer Form eines Flüssigkeitströpfchens (d1) abgegeben wird, geringer ist als eine Gesamtmenge einer Menge eines Flüssigkeitströpfchens der härtbaren Zusammensetzung A, die durch das Tintenstrahlverfahren in einer Form eines Flüssigkeitströpfchens (d2) abgegeben wird, und einer Menge eines Flüssigkeitströpfchens der härtbaren Zusammensetzung B, die durch das Tintenstrahlverfahren in einer Form eines Flüssigkeitströpfchens (d2) abgegeben wird.

11. Herstellungsverfahren für ein dreidimensionales Objekt nach Anspruch 10,
wobei die Menge des Flüssigkeitströpfchens der härtbaren Zusammensetzung C, die durch das Tintenstrahlverfahren in einer Form eines Flüssigkeitströpfchens (d1) abgegeben wird, 70 Volumen-% oder weniger beträgt, bezogen auf die Gesamtmenge der Menge des Flüssigkeitströpfchens der härtbaren Zusammensetzung A, die durch das Tintenstrahlverfahren in einer Form eines Flüssigkeitströpfchens (d2) abgegeben wird, und der Menge des Flüssigkeitströpfchens der härtbaren Zusammensetzung B, die durch das Tintenstrahlverfahren in einer Form eines Flüssigkeitströpfchens (d2) abgegeben wird.

12. Herstellungsverfahren für ein dreidimensionales Objekt nach Anspruch 11,
wobei die Menge des Flüssigkeitströpfchens der härtbaren Zusammensetzung C, die durch das Tintenstrahlverfahren in einer Form eines Flüssigkeitströpfchens (d1) abgegeben wird, 50 Volumen-% oder weniger beträgt, bezogen auf die Gesamtmenge der Menge des Flüssigkeitströpfchens der härtbaren Zusammensetzung A, die durch das Tintenstrahlverfahren in einer Form eines Flüssigkeitströpfchens (d2) abgegeben wird, und der Menge des Flüssigkeitströpfchens der härtbaren Zusammensetzung B, die durch das Tintenstrahlverfahren in einer Form eines Flüssigkeitströpfchens (d2) abgegeben wird.

13. Herstellungsverfahren für ein dreidimensionales Objekt nach einem der Ansprüche 1 bis 12,
wobei die härtbare Zusammensetzung C ein Pigment mit einem volumengemittelten Partikeldurchmesser von 10 nm oder mehr und 1 000 nm oder weniger enthält, und
ein Gehalt des Pigments 0,1 Massen-% oder mehr beträgt, bezogen auf eine Gesamtmasse der härtbaren Zusammensetzung C.

14. Herstellungsverfahren für ein dreidimensionales Objekt nach einem der Ansprüche 1 bis 13,
wobei die härtbare Zusammensetzung C im Wesentlichen frei von einer festen Komponente mit einem Elastizitätsmodul von 4 GPa oder höher ist.

15. Herstellungsverfahren für ein dreidimensionales Objekt nach einem der Ansprüche 1 bis 14,
wobei das Färbematerial in der härtbaren Zusammensetzung C ein Pigment enthält, und
die härtbare Zusammensetzung A und die härtbare Zusammensetzung B im Wesentlichen frei von einem Pigment sind.

16. Herstellungsverfahren für ein dreidimensionales Objekt nach einem der Ansprüche 1 bis 15, ferner umfassend
Abgeben einer härtbaren Zusammensetzung D zur Abstützung, die zum Abstützen des dreidimensionalen Objekts dient, durch ein Tintenstrahlverfahren und Härten der härtbaren Zusammensetzung D zur Abstützung, um ein gehärtetes Produkt D zur Abstützung herzustellen.

17. Herstellungsverfahren für ein dreidimensionales Objekt nach einem der Ansprüche 1 bis 16, wobei das dreidimensionale Objekt ein künstliches Zahnobjekt ist.

18. Vorrichtung (30) zur Herstellung eines dreidimensionalen Objekts, die dafür konfiguriert ist, ein dreidimensionales Objekt (10) unter Verwendung eines Satzes von basishärtbaren Zusammensetzungen, die eine härtbare Zusammensetzung A und eine härtbare Zusammensetzung B einschließen, und unter Verwendung einer härtbaren Zusammensetzung C herzustellen, wobei die Vorrichtung zur Herstellung eines dreidimensionalen Objekts eine Einheit (31) zur Herstellung eines basisgehärteten Produkts, eine Einheit (31) zur Herstellung eines gehärteten Produkts C und eine Steuerungseinheit umfasst, wobei die Steuerungseinheit dafür konfiguriert ist:
eine Einheit zur Herstellung eines basisgehärteten Produkts zu steuern, um eine oder beide der härtbaren Zusammensetzung A und der härtbaren Zusammensetzung B durch ein Tintenstrahlverfahren abzugeben und eine oder beide der härtbaren Zusammensetzung A und der härtbaren Zusammensetzung B zu härten, um ein basisgehärtetes Produkt herzustellen; und
eine Einheit zur Herstellung eines gehärteten Produkts C zu steuern, um die härtbare Zusammensetzung C, die ein Färbematerial enthält, durch ein Tintenstrahlverfahren abzugeben und die härtbare Zusammensetzung C zu härten, um ein gehärtetes Produkt C herzustellen,
wobei ein absoluter Wert einer Differenz zwischen einer Gesamtlichtdurchlässigkeit durch ein gehärtetes Produkt A der härtbaren Zusammensetzung A und einer Gesamtlichtdurchlässigkeit durch ein gehärtetes Produkt B der härtbaren Zusammensetzung B 10 % oder mehr beträgt,
**dadurch gekennzeichnet, dass** die Steuerungseinheit ferner dafür konfiguriert ist, die Einheit zur Herstellung eines basisgehärteten Produkts und die Einheit zur Herstellung eines gehärteten Produkts C so zu steuern, dass ein abgelagerter Bereich C (D1), der durch Ablagerung einer Menge von Flüssigkeitströpfchen (d1) der abgegebenen härtbaren Zusammensetzung C gebildet wird, kleiner ist als ein basisabgelagerter Bereich (D2), der durch Ablagerung einer Menge von Flüssigkeitströpfchen (d2) der abgegebenen härtbaren Zusammensetzung A und der abgegebenen härtbaren Zusammensetzung B gebildet wird.

## Revendications

1. Procédé de production d'objet tridimensionnel pour produire un objet tridimensionnel en utilisant un ensemble de compositions durcissables de base incluant une composition durcissable A et une composition durcissable B, et en utilisant une composition durcissable C, le procédé de production d'objet tridimensionnel comprenant :
la décharge de l'une ou l'autre ou des deux de la composition durcissable A et la composition durcissable B par un procédé de jet d'encre et le durcissement de l'une ou l'autre ou des deux de la composition durcissable A et de la composition durcissable B, pour produire un produit durci de base ; et
la décharge de la composition durcissable C contenant un matériau de coloration par un procédé de jet d'encre et le durcissement de la composition durcissable C, pour produire un produit durci C,
dans lequel une valeur absolue d'une différence entre une transmittance de lumière totale à travers un produit durci A de la composition durcissable A et une transmittance de lumière totale à travers un produit durci B de la composition durcissable B est de 10 % ou plus,
**caractérisé en ce qu'**une zone déposée C (D1) formée par dépôt d'une quantité de gouttelettes de liquide (d1) de la composition durcissable C déchargée est plus petite qu'une zone déposée de base (D2) formée par dépôt d'une quantité de gouttelettes de liquide (d2) de la composition durcissable A et de la composition durcissable B déchargées.

2. Procédé de production d'objet tridimensionnel selon la revendication 1,
dans lequel une différence entre une transmittance de lumière totale à travers une partie, de l'objet tridimensionnel, à travers laquelle la transmittance de lumière totale est la plus élevée et une transmittance de lumière totale à travers une partie, de l'objet tridimensionnel, à travers laquelle la transmittance de lumière totale est la plus faible est de 10 % ou plus.

3. Procédé de production d'objet tridimensionnel selon la revendication 2,
dans lequel une différence entre une transmittance de lumière totale à travers une partie, de l'objet tridimensionnel, à travers laquelle la transmittance de lumière totale est la plus élevée et une transmittance de lumière totale à travers une partie, de l'objet tridimensionnel, à travers laquelle la transmittance de lumière totale est la plus faible est de 30 % ou plus.

4. Procédé de production d'objet tridimensionnel selon la revendication 3,
dans lequel la transmittance de lumière totale à travers le produit durci A est de 35 % ou moins, et la transmittance de lumière totale à travers le produit durci B est de 60 % ou plus.

5. Procédé de production d'objet tridimensionnel selon l'une quelconque des revendications 1 à 4,
dans lequel la décharge de la composition durcissable A et la décharge de la composition durcissable B sont effectuées dans un même balayage.

6. Procédé de production d'objet tridimensionnel selon l'une quelconque des revendications 1 à 5,
dans lequel la composition durcissable A contient un composant solide ayant un module d'élasticité de 4 GPa ou plus et un diamètre de particule moyen en volume de 10 nm ou plus et 1 000 nm ou moins, et
la composition durcissable B contient un composant solide ayant un module d'élasticité de 4 GPa ou plus et un diamètre de particule moyen en volume de 10 nm ou plus et 1 000 nm ou moins.

7. Procédé de production d'objet tridimensionnel selon la revendication 6,
dans lequel la composition durcissable A contient un composant solide ayant un module d'élasticité de 4 GPa ou plus et un diamètre de particule moyen en volume supérieur à 100 nm et de 1 000 nm ou moins, une teneur du composant solide dans la composition durcissable A étant de 10 % en volume ou plus, et
la composition durcissable B contient un composant solide ayant un module d'élasticité de 4 GPa ou plus et un diamètre de particule moyen en volume supérieur à 100 nm et de 1 000 nm ou moins, une teneur du composant solide dans la composition durcissable B étant de 10 % en volume ou moins, ou contient un composant solide ayant un module d'élasticité de 4 GPa ou plus et un diamètre de particule moyen en volume de 10 nm ou plus et de 100 nm ou moins, une teneur du composant solide dans la composition durcissable B étant de 60 % en volume ou moins.

8. Procédé de production d'objet tridimensionnel selon l'une quelconque des revendications 1 à 7,
dans lequel la zone déposée C (D1) formée par la composition durcissable C étant déchargée par le procédé de jet d'encre sous une forme d'une gouttelette de liquide (d1) et déposée et la zone déposée de base (D2) formée par la composition durcissable A et la composition durcissable B étant déchargées par le procédé de jet d'encre sous une forme d'une gouttelette de liquide (d2) et déposées ont une zone de chevauchement.

9. Procédé de production d'objet tridimensionnel selon l'une quelconque des revendications 1 à 8,
dans lequel la zone déposée de base (D2) formée par la composition durcissable A et la composition durcissable B étant déchargées par le procédé de jet d'encre sous une forme d'une gouttelette de liquide (d2) et déposées surplombe la zone déposée C (D1) formée par la composition durcissable C qui est déchargée par le procédé de jet d'encre sous une forme d'une gouttelette de liquide (d1) et déposée, pour avoir une zone de chevauchement au-dessus de la zone déposée (D1).

10. Procédé de production d'objet tridimensionnel selon l'une quelconque des revendications 1 à 9,
dans lequel une quantité d'une gouttelette de liquide de la composition durcissable C déchargée par le procédé de jet d'encre sous une forme d'une gouttelette de liquide (d1) est plus petite qu'un total d'une quantité d'une gouttelette de liquide de la composition durcissable A déchargée par le procédé de jet d'encre sous une forme d'une gouttelette de liquide (d2) et d'une quantité d'une gouttelette de liquide de la composition durcissable B déchargée par le procédé de jet d'encre sous une forme d'une gouttelette de liquide (d2).

11. Procédé de production d'objet tridimensionnel selon la revendication 10,
dans lequel la quantité de la gouttelette de liquide de la composition durcissable C déchargée par le procédé de jet d'encre sous une forme d'une gouttelette de liquide (d1) est de 70 % en volume ou moins par rapport au total de la quantité de la gouttelette de liquide de la composition durcissable A déchargée par le procédé de jet d'encre sous une forme d'une gouttelette de liquide (d2) et de la quantité de la gouttelette de liquide de la composition durcissable B déchargée par le procédé de jet d'encre sous une forme d'une gouttelette de liquide (d2).

12. Procédé de production d'objet tridimensionnel selon la revendication 11,
dans lequel la quantité de la gouttelette de liquide de la composition durcissable C déchargée par le procédé de jet d'encre sous une forme d'une gouttelette de liquide (d1) est de 50 % en volume ou moins par rapport au total de la quantité de la gouttelette de liquide de la composition durcissable A déchargée par le procédé de jet d'encre sous une forme d'une gouttelette de liquide (d2) et de la quantité de la gouttelette de liquide de la composition durcissable B déchargée par le procédé de jet d'encre sous une forme d'une gouttelette de liquide (d2).

13. Procédé de production d'objet tridimensionnel selon l'une quelconque des revendications 1 à 12,
dans lequel la composition durcissable C contient un pigment ayant un diamètre de particule moyen en volume de 10 nm ou plus et de 1 000 nm ou moins, et
une teneur du pigment est de 0,1 % en masse ou plus par rapport à une masse totale de la composition durcissable C.

14. Procédé de production d'objet tridimensionnel selon l'une quelconque des revendications 1 à 13,
dans lequel la composition durcissable C est sensiblement exempte d'un composant solide ayant un module d'élasticité de 4 GPa ou plus.

15. Procédé de production d'objet tridimensionnel selon l'une quelconque des revendications 1 à 14,
dans lequel le matériau de coloration dans la composition durcissable C contient un pigment, et
la composition durcissable A et la composition durcissable B sont sensiblement exemptes d'un pigment.

16. Procédé de production d'objet tridimensionnel selon l'une quelconque des revendications 1 à 15, comprenant en outre
la décharge d'une composition durcissable D pour un support, qui est pour le support de l'objet tridimensionnel, par un procédé de jet d'encre et le durcissement de la composition durcissable D pour un support, pour produire un produit durci D pour un support.

17. Procédé de production d'objet tridimensionnel selon l'une quelconque des revendications 1 à 16, dans lequel l'objet tridimensionnel est un objet de dent artificielle.

18. Appareil de production d'objet tridimensionnel (30) configuré pour produire un objet tridimensionnel (10) en utilisant un ensemble de compositions durcissables de base incluant une composition durcissable A et une composition durcissable B, et en utilisant une composition durcissable C, l'appareil de production d'objet tridimensionnel comprenant une unité de production de produit durci de base (31), une unité de production de produit durci C (31) et une unité de commande, dans lequel l'unité de commande est configurée pour :
commander une unité de production de produit durci de base pour qu'elle décharge l'une ou l'autre ou les deux de la composition durcissable A et de la composition durcissable B par un procédé de jet d'encre et durcisse l'une ou l'autre ou les deux de la composition durcissable A et de la composition durcissable B, pour produire un produit durci de base ; et
commander une unité de production de produit durci C pour décharger la composition durcissable C contenant un matériau de coloration par un procédé de jet d'encre et durcir la composition durcissable C, pour produire un produit durci C,
dans lequel une valeur absolue d'une différence entre une transmittance de lumière totale à travers un produit durci A de la composition durcissable A et une transmittance de lumière totale à travers un produit durci B de la composition durcissable B est de 10 % ou plus,
**caractérisé en ce que** l'unité de commande est en outre configurée pour commander l'unité de production de produit durci de base et l'unité de production de produit durci C de sorte qu'une zone déposée C (D1) formée par dépôt d'une quantité de gouttelettes de liquide (d1) de la composition durcissable C déchargée est plus petite qu'une zone déposée de base (D2) formée par dépôt d'une quantité de gouttelettes de liquide (d2) de la composition durcissable A et de la composition durcissable B déchargées.
